# EUROPÄISCHE PATENTSCHRIFT

(11) **EP 3 004 620 B1**
(45) Veröffentlichungstag und Bekanntmachung des Hinweises auf die Patenterteilung: **02.08.2017**
(21) Anmeldenummer: 14730776.3
(22) Anmeldetag: 28.05.2014
(51) Int. Cl.: F02M 37/22, B01D 36/00

(54) **FILTERELEMENT**
FILTER ELEMENT
ÉLÉMENT FILTRANT

(30) Priorität: 28.05.2013 DE 102013008987; 12.12.2013 DE 102013020539
(43) Veröffentlichungstag der Anmeldung: 13.04.2016
(73) Patentinhaber: Mann + Hummel GmbH, 71638 Ludwigsburg (DE)
(72) Erfinder: JOKSCHAS, Günter, 71540 Murrhardt (DE); WEINDORF, Martin, 70806 Kornwestheim (DE); VEIT, Martin, 71116 Gärtringen (DE); SALOM, Rafael, 71686 Remseck (DE)
(86) Internationale Anmeldenummer: PCT/EP2014/061117
(87) Internationale Veröffentlichungsnummer: WO 2014/191486

(56) Entgegenhaltungen:
- WO-A1-02/076570
- WO-A1-2011/039020
- WO-A2-2012/092493
- DE-A1- 19 716 085
- US-A1- 2005 023 209
- US-A1- 2006 053 756
- US-A1- 2009 230 063

## Beschreibung

### Technisches Gebiet

Die Erfindung betrifft ein Filterelement zum Filtern eines Fluids sowie ein Filtersystem mit einem Filterelement, insbesondere ein Kraftstofffilter eines Kraftfahrzeugs.

### Stand der Technik

Beim Betrieb eines Flüssigkeitsfilters beispielsweise als Kraftstofffilter für Dieselkraftstoff sollen Luftblasen vermieden werden, die der Brennkraftmaschine zugefördert werden könnten. Bei dem Beginn der Flüssigkeitszuführung in eine äußere Kammer einer Filteranordnung wird nämlich in der Regel eine gewisse, der Flüssigkeit vorgelagerte Luftmenge mit in die äußere Kammer transportiert. Diese Luftmenge wird von der nachdrückenden Flüssigkeit ebenfalls durch den Filtereinsatz gedrückt und gelangt somit auch in den Auslass der Filteranordnung. Insbesondere bei der Verwendung als Kraftstofffilter ist dies sehr nachteilig, da die nachgeschalteten Aggregate, wie zum Beispiel eine Brennkraftmaschine, durch Lufteinschlüsse bei der Kraftstoffzuführung im Betrieb behindert werden können.

Aus diesem Grund sollte eine Entlüftung im Flüssigkeitsfilter vorgesehen werden. Durch diese Entlüftung und insbesondere durch eine dabei vorgesehene Bohrung, die auch als Entlüftungsdüse bezeichnet wird, ergibt sich jedoch ein permanenter Verlust-Volumenstrom an Kraftstoff, der direkt in den Tank zurückgefördert wird, zusammen mit den Luftblasen. In der Praxis sind beispielsweise Bohrungen mit Durchmessern bis zu 0,7 mm üblich. Der durch diese vergleichsweise großen Bohrungen gelangende Verlust-Volumenstrom sollte jedoch möglichst gering sein.

Die EP 1 356 199 B1 schlägt deshalb vor, zwei Entlüftungsdüsen hintereinander zu schalten, d. h. zwei Bohrungen vorzusehen, die in Strömungsrichtung der Luftblasen bzw. des Kraftstoff-Verluststromes hintereinander angeordnet sind. Die Entlüftungsfunktion wird dabei über ein filtergehäusefestes Rohr mit einer ersten Bohrung realisiert, das zur Aufnahme des Filterelements dient, welches mit einem Deckel mit einer zweiten Bohrung abgeschlossen ist. Dadurch sind in der Entlüftungsfunktion beide Entlüftungsdüsen hintereinander geschaltet. Auf diese Weise ergibt sich ein vergrößerter Widerstand für die Flüssigkeit verglichen mit der Verwendung lediglich einer gleichgroßen Entlüftungsdüse. Dieser vergrößerte Widerstand könnte bei Verwendung lediglich einer Entlüftungsdüse durch einen geringeren Durchmesser der Bohrung erzielt werden, wobei dies jedoch herstellungstechnisch aufwendig sein kann und zudem die Gefahr bergen kann, dass die besonders kleine Bohrung schnell verstopft, so dass die Entlüftungsfunktion nicht mehr gegeben ist.

Aus der DE 197 16 085 A1 ist ein Kraftstofffilter bekannt, der ein rohrförmiges Bauteil im Inneren des Filterelements aufweist. Das rohrförmige Bauteil dient neben dem Verschließen eines Ablaufkanals auch dem Entlüften über eine in der oberen Endscheibe vorliegende Drosselbohrung.

Darüber hinaus ist aus der WO 02/076570 A1 ein Filtersystem bekannt, das ein zentrales rohrförmiges Element aufweist, das am oberen Ende mit der Endscheibe verbunden ist und eine Entlüftungsbohrung, deren Durchmesser beispielsweise 0,5 mm beträgt, aufweist. Das rohrförmige Element hat an seinem oberen Ende eine Kugelkupplung, mit der es mit korrespondierenden Kupplungsfingern des Deckels verbunden ist. An seinem unteren Ende hat das rohrförmige Bauteil eine radial außenliegende Dichtung, die in einer Dichtungsnut angeordnet ist und das Rohr gegenüber dem Rücklaufkanal abdichtet.

Des Weiteren wird die WO 2012/092493 A2 genannt, aus der ein Filterelement bekannt ist, das jedoch kein Zentralrohr als Rücklauf hat, sondern der Rücklauf über einen Ringspalt zwischen einem als Zentralrohr ausgebildeten Reinflüssigkeitsauslass und einem äußeren Hohlzylinder erfolgt.

Ferner betreffen die US 2009/230063 A1 und US 2006/053756 A1 Filtereinrichtungen, die in zumindest einer Fluidleitung ein Rückschlagventil aufweisen.

### Offenbarung der Erfindung

Eine Aufgabe der Erfindung ist daher, ein Filterelement so auszubilden, dass eine Entlüftung eines Tanksystems auf einfache und zuverlässige Weise dargestellt werden kann.

Eine weitere Aufgabe der Erfindung ist es, ein Filtersystem zur Aufnahme eines solchen wechselbaren Filterelements zu schaffen, welches eine Entlüftung eines Tanksystems auf einfache und zuverlässige Weise darstellen kann.

Die vorgenannten Aufgaben werden nach einem Aspekt der Erfindung bei einem Filterelement mit einem ersten Fluidpfad auf einer Rohseite zum Filtern eines ersten Fluids und einem zweiten Fluidpfad mit einer Fluidleitung auf einer Reinseite zur Führung eines zweiten Fluids dadurch gelöst, dass die Fluidleitung zentrisch im Innenbereich des Filterelements angeordnet und mit der Endscheibe zum gemeinsamen Ausbau, insbesondere filterelementfest, verbunden ist.

Nach einem anderen Aspekt der Erfindung wird die Aufgabe durch ein Filtersystem mit einem Filterelement gelöst, wobei das Filterelement wechselbar in einem Filtergehäuse des Filtersystems angeordnet ist und eine Aufnahme für eine Fluidleitung und/oder eine Aufnahme für ein Rückschlagventil vorsieht.

Günstige Ausgestaltungen und Vorteile der Erfindung ergeben sich aus den weiteren Ansprüchen, der Beschreibung und der Zeichnung.

Es wird ein Filterelement mit einem ersten Fluidpfad auf einer Rohseite zum Filtern eines ersten Fluids und einem zweiten Fluidpfad mit einer Fluidleitung auf einer Reinseite zur Führung eines zweiten Fluids vorgeschlagen, welches Filterelement wenigstens einseitig mit einer ersten Endscheibe versehen ist, wobei die Fluidleitung zentrisch im Innenbereich des Filterelements angeordnet und mit der Endscheibe zum gemeinsamen Ausbau, insbesondere filterelementfest, verbunden ist. Das Filterelement weist des Weiteren einen Abströmanschluss auf, der als stutzenförmiger Fortsatz der Fluidleitung ausgebildet ist.

Mittels des Abströmanschlusses ist die elementseitige Fluidleitung bei der Montage des Filterelements in dem Gehäuse des Filtersystems an einen gehäuseseitigen Abströmkanal anschließbar. Vorzugsweise kann der Abströmanschluss derart gestaltet sein, dass er zur Halterung bzw. Stütze des Filterelementes im Gehäuse beiträgt. Der gehäuseseitige Abströmkanal ist vorzugsweise mit einem Tankrücklauf verbunden.

Darüber hinaus weist das Filterelement im Bereich derjenigen Stirnseite, an welcher der Abströmanschluss angeordnet ist, einen Reinfluidauslass auf, der mit einem stutzenförmigen Fortsatz versehen ist, der den Abströmanschluss umgibt. So können die verschiedenen Anschlüsse vorteilhaft in den Gehäusetopf integriert sein und eine Kontamination der Reinseite des Filters mit ungefiltertem Fluid vermieden werden.

Ferner ist an der Stirnseite, an welcher der Abströmanschluss angeordnet ist, ein Wasserauslass für aus dem ersten Fluid (Kraftstoff) abgeschiedenes Wasser vorgesehen, der den stutzenförmigen Fortsatz des Reinfluidauslasses umgibt. Ein Vermischen des abgeschiedenen Wassers mit dem gefilterten Kraftstoff wird vermieden, indem der Wasserauslass den stutzenförmigen Fortsatz umgibt, der den Reinfluidauslass umgibt.

Im Falle eines bevorzugten Ausführungsbeispiels weist die Endscheibe eine Bohrung dergestalt auf, dass die Fluidleitung über die Bohrung mit einem Außenbereich des Filterelements verbunden ist.

Das Filterelement weist folglich die Fluidleitung des zweiten Fluidpfades auf. Die Fluidleitung ist mit dem Filterelement wechselbar. Insbesondere ist es unverlierbar mit dem (übrigen) Filterelement verbunden. Die elementseitige Fluidleitung kann also auch elementfest ausgebildet sein. Vorzugsweise ist die Fluidleitung integraler Bestandteil des Filterelementes. Im Speziellen kann keine zerstörungsfreie Trennung der Fluidleitung von dem (übrigen) Filterelement erfolgen.

Die elementseitige Fluidleitung kann vorzugsweise als ein biegesteifes Rohr ausgebildet sein, welches einen Beitrag zur Stabilität des Filterelements liefert.

Vorteilhafterweise mündet die elementseitige Fluidleitung im montierten Zustand des Filterelements oberhalb eines Filterkörpers, so dass durch die Fluidleitung beispielsweise erst dann Kraftstoff abströmt, wenn der Filterkörper vollständig mit Kraftstoff beaufschlagt ist, d. h. die Luft soweit auf dem Kraftstofffilter verdrängt ist, dass der Kraftstoffpegel oberhalb des Filterkörpers verläuft.

Besonders bevorzugt ist eine Variante, bei welcher die Fluidleitung von einer Stirnseite des Filterelements, insbesondere der oberen Stirnseite bei dem montierten Filterelement, zur gegenüberliegenden (unteren) Stirnseite führt. Auf diese Weise kann z. B. eine Abführung der Luft aus dem Filter günstiger Weise über den Gehäuseboden erfolgen.

Eine besonders kompakte Bauweise ergibt sich, indem die Fluidleitung durch einen von dem Filterkörper umgebenen Innenbereich verläuft. Beispielsweise weist der Filterkörper eine Filtermedienbahn, vorzugsweise eine sterngefaltete Filtermediumbahn, zur Partikelfiltration auf. Innerhalb der Filtermedienbahn ist vorzugsweise ein Koaleszer, z. B. aus einem gewickelten Koaleszermedium, vorgesehen. Auf das Koaleszermedium folgt in Durchströmungsrichtung ein Wasserabscheideelement mit z. B. einem hydrophoben Siebgewebe, das beispielsweise innerhalb des Koaleszermediums bzw. auf dessen Höhe angeordnet ist. Zwischen dem Koaleszermedium und dem Wasserabscheideelement ist ein Wasserausfällringspalt ausgebildet. Die Fluidleitung ist durch den von dem Wasserabscheideelement umgebenen Innenbereich geführt.

Die Fluidleitung und das Wasserabscheideelement können vorzugsweise eine bauliche Einheit bilden.

Im Falle einer besonders bevorzugten Variante ist das Filterelement mit einem Einströmanschluss versehen, mittels dessen die elementseitige Fluidleitung bei der Montage des Filterelements in dem Gehäuse des Filtersystems an z. B. eine Ventil- und/oder Drosseleinheit, wie ein Rückschlagventil anschließbar ist. Diese Variante ermöglicht es beispielsweise, das Rückschlagventil gehäuseseitig anzuordnen. Es muss also bei einem Wechsel des Filterelementes nicht mit ausgewechselt werden.

Eine besonders robuste Bauart eines Einströmanschlusses ergibt sich beispielsweise, indem er als stutzenförmiger Fortsatz der Fluidleitung ausgebildet ist. Ein als stutzenförmiger Fortsatz ausgebildeter Einströmanschluss kann außerdem auf einfache Weise oberhalb des übrigen Filterelementes, insbesondere oberhalb des Filterkörpers angeordnet sein. Vorzugsweise steht er an einer Stirnseite des Filterelements, insbesondere der oberen Stirnseite, vor.

Zum Zwecke einer einfachen Montage des Filterelementes ist der Einstömanschluss koaxial zu einer Elementlängsachse angeordnet. Insbesondere kann das Filterelement dank dieser Maßnahme in jeder Drehstellung um seine Elementlängsachse eingebaut werden.

Im Falle eines besonders bevorzugten Ausführungsbeispiels ist der Einströmanschluss mit einem Dichtungselement zur dichtenden Anlage an ein Gehäusebauteil wie ein Rückschlagventil versehen. Gerade Dichtungselemente unterliegen einem erheblichen Verschleiß, so dass es vorteilhaft ist, das Dichtungselement am Einströmanschluss vorzusehen, der mitsamt dem Filterelement regelmäßig ausgewechselt wird.

Günstige Dichtungsverhältnisse und Montagekräfte ergeben sich, indem das Dichtungselement vorzugsweise als ein umlaufendes, radial nach außen gerichtetes Dichtungselement ausgebildet ist. In der Praxis bewährt hat sich z. B. ein auf den elementseitigen Anschlussstutzen aufgezogener O-Ring.

Vergleichbar zu den Verhältnisse seitens des Rückschlagventilanschlusses kann auch der Abströmanschluss mit einem Dichtungselement zur dichtenden Anlage an den gehäuseseitigen Abströmkanal versehen sein, das insbesondere ein umlaufendes, radial nach außen gerichtetes Dichtungselement ist. Ein auf den abströmseitigen Anschlussstutzen aufgezogener O-Ring ist als bewährtes Beispiel zu nennen.

Aus Montagegründen ist ein koaxial zu einer Elementlängsachse angeordneter Anströmanschluss von Vorteil.

Bei einem besonders bevorzugten Beispiel weist das Filterelement im Bereich derjenigen Stirnseite, welche bei montiertem Filterelement unten angeordnet ist, zwei umlaufende Dichtungen aufweist. Beispielsweise bei einem Kraftstofffilter mit einer reinseitigen Wasserabscheidung können diese Dichtungen zum Abdichten eines rohfluidseitigen Ringraums, der das Filterelement umgibt, von einem reinfluidseitigen Wassersammelbereich unterhalb des Filterelements dienen. Zwei Dichtungen sind vorgesehen, um bei einer Entnahme des Filterelementes den Ablauf des Kraftstoffs aus rohfluidseitigem Ringraum derart zu steuern, dass eine Kontamination des reinseitigen Wassersammelbereichs mit dem Rohfluid aus dem äußeren Ringraum vermieden bzw. wenigstens reduziert wird. Im Speziellen dient eine der Dichtungen zum Abdichten des rohfluidseitigen Ringraums gegenüber einem Leerlaufbereich. Die andere Dichtung dient zum Abdichten des Leerlaufbereichs gegenüber dem reinseitigen Wassersammelbereich. Die erste Dichtung verliert bei der Demontage des Filterelements zeitlich vor der zweiten Dichtung die dichtende Anlage mit dem Gehäuse. Der Leerlaufbereich ist vorzugsweise mit einem Tankrücklauf verbunden.

Bei einer besonders bevorzugten Variante sind die beiden Dichtungselemente im Bereich derjenigen Stirnseite angeordnet, an welcher auch der Abströmanschluss der elementseitigen Fluidleitung vorgesehen ist.

Zum Zwecke von niedrigen Montagekräften und einer kompakten Bauform ist zumindest eine der Dichtungen radial nach außen gerichtet und/oder zumindest eine der Dichtungen radial nach innen gerichtet ist. Die beiden Dichtungen weisen vorzugsweise unterschiedliche Durchmesser auf und/oder sind koaxial zueinander angeordnet.

Alternativ oder ergänzend zu einer Variante mit einem gehäuseseitigen Rückschlagventil ist ein Rückschlagventil an der Fluidleitung, welche vorzugsweise elementfest ausgebildet ist, befestigt. Besonders kompakt ist eine Bauart, bei welcher das Rückschlagventil in die Fluidleitung integriert ist.

Gemäß der Erfindung erfolgt eine Entlüftung eines Filtersystems über das Filterelement selbst. Im Innenbereich des Filterelements befindet sich eine Fluidleitung als Entlüftungskanal, der vorzugsweise rohrförmig ausgebildet ist. Die Fluidleitung ist mit der ersten Endscheibe verbunden, in die eine kleine Bohrung integriert ist. Durch diese Bohrung kann die Luft im Filtersystem beispielsweise während der Inbetriebnahme durch das Filterelement abgeführt werden. Die Entlüftung ist so vollständig von der Reinseite getrennt. Bei der Inbetriebnahme eines Filtersystems befindet sich erst das zweite Fluid, also üblicherweise Luft, in der Fluidleitung, während im Betrieb die Fluidleitung mit dem ersten Fluid, also beispielsweise Kraftstoff, der Rohseite gefüllt ist.

Durch eine Entlüftung im bzw. durch das Filterelement sind deutlich einfachere Lösungen eines Filtergehäuses darstellbar. Dadurch können aufwendige Bearbeitungen des Filtergehäuses entfallen und die Funktion eines Filtersystems mit weniger Teilen sichergestellt werden, gegenüber Lösungen, bei denen die Entlüftung über einen im Filtergehäuse angeordneten Entlüftungskanal erfolgt. Dabei ist die Fluidleitung so angeordnet, dass sie mit dem Filterelement gemeinsam ausgebaut werden kann, da sie mit diesem insbesondere fest verbunden ist.

Günstigerweise kann die Fluidleitung des zweiten Fluids in einem mit der Endscheibe verbundenen und über wenigstens eine einer ersten Endscheibe und/oder einer zweiten Endscheibe hinausragenden Stützrohr angeordnet sein. Dadurch lässt sich ein zusätzlicher Entlüftungskanal vermeiden und das Stützrohr, das fest mit der ersten Endscheibe verbunden ist sowie alternativ weitere Befestigungselemente zum Filterkörper aufweisen kann, kann so einer zusätzlichen Versteifung des Filterelements dienen. Dadurch, dass die Fluidleitung über die Endscheiben hinausragt, lässt sich die Montage des Filterelements im Filtergehäuse, bzw. des Deckels mit einem darin vorhandenen Rückschlagventil, das auf die Fluidleitung aufgesteckt werden kann, vereinfachen.

Vorteilhafterweise kann im zweiten Fluidpfad ein Rückschlagventil angeordnet sein, welches Rückschlagventil den zweiten Fluidpfad sperrt. Vorzugsweise sperrt das Rückschlagventil den zweiten Fluidpfad, wenn eine vorgegebene Systemdruckuntergrenze unterschritten wird. Insbesondere wenn auf einer Rohseite des Filters die vorgegebene Systemdruckuntergrenze unterschritten wird, was insbesondere passiert, wenn z. B. eine Brennkraftmaschine abgeschaltet wird, wodurch ein Fluss des ersten Fluids durch das Filterelement unterbrochen wird oder ist.

So kann die üblicherweise gewünschte Dauerentlüftung eines Filterelements einer Brennkraftmaschine mit einem Rückschlagventil ausgestattet werden. Auf diese Weise kann bei abgeschalteter Brennkraftmaschine, beispielsweise im Start/Stopp-Betrieb, der Kraftstoff im Filtersystem gehalten werden und verhindert werden, dass eventuell in einem Tankrücklauf vorhandene Luft über das Filtersystem in das Kraftstoffführungssystem der Brennkraftmaschine gelangt. Wenn die Brennkraftmaschine nicht läuft, kann so die Entlüftung des Filterelements verschlossen bleiben. Wird die Brennkraftmaschine gestartet, und bei Start/Stopp-Betrieb ist üblicherweise eine sehr kurze Motorstartzeit wünschenswert, kann im Filtersystem sofort der notwendige Systemdruck im Kraftstoffführungssystem für eine Zündfreigabe aufgebaut werden. Der Systemdruck, der sich in einem Außenbereich des Filterelements aufbaut, ermöglicht ein Öffnen des Rückschlagventils und das Filterelement kann wieder dauerhaft entlüftet werden. Der große Vorteil ist also, dass kurze Motorstartzeiten ermöglicht werden, dadurch, dass der Kraftstoff im Filtersystem verbleibt.

Eine weitere vorteilhafte Gestaltungsmöglichkeit ist es, das Filterelement so auszuführen, dass ein Rückschlagventil alternativ oder zusätzlich innerhalb der Fluidleitung und mit einer konzentrischen Dichtung zu der Fluidleitung abgedichtet, angeordnet ist, wobei die Dichtung insbesondere zum gemeinsamen Ausbau mit dem Filterelement angeordnet ist. Bevorzugt kann für diese Dichtung eine mit der Fluidleitung fest verbundene Formdichtung verwendet werden. Die Fluidleitung, die insbesondere in einem zentralen Stützrohr des Filterelements realisiert sein kann, kann so direkt mit dem Rückschlagventil abgeschlossen werden, was die Anzahl der Bauteile reduzieren und die Montage weiter vereinfachen kann. Wird die Dichtung gemeinsam mit dem Filterelement ausgebaut, so ist dadurch gewährleistet, dass sie auch beim Wechsel des Filterelements mit gewechselt wird und so nicht eine gebrauchte und eventuell nicht mehr sichere Dichtung nach dem Wechsel des Filterelements weiter verwendet wird.

Eine vorteilhafte Ausgestaltung des Filterelements sieht weiter vor, dass das Rückschlagventil mit einer Schnappverbindung befestigbar sein kann, insbesondere fluiddicht befestigbar. Eine Abdichtung in der Fluidleitung kann dabei beispielsweise mit einer O-Ring-Dichtung realisiert werden. Das Rückschlagventil, das in dieser Ausgestaltung günstigerweise in einem Ventilträger angeordnet sein kann, kann so bei der Montage leicht eingesetzt werden. Die Endscheibe des Filterelements kann über die Schnappverbindung das Rückschlagventil fest halten. Das Rückschlagventil kann alternativ über einen Gehäusedeckel des Filtersystems ebenfalls durch die Schnappverbindung gehalten werden. Außerdem lässt sich das Rückschlagventil durch eine solche, über eine O-Ring-Dichtung abgedichtete Anordnung in einem Fehlerfall des Rückschlagventils auch leicht austauschen.

Günstigerweise kann das Rückschlagventil in einem Gehäuseoberteil eines Filtergehäuses angebracht sein, wobei die Fluidleitung durch die Endscheibe zugängig sein kann und das Rückschlagventil oberhalb der oder in der Endscheibe angeordnet sein kann. Auf diese Weise ist eine einfache Montage und auch eventuelle Austauschbarkeit des Rückschlagventils im Fehlerfall gegeben.

Günstigerweise kann das Filterelement hohlzylinderförmig ausgeführt sein und der erste Fluidpfad radial durch einen Filterkörper des hohlzylinderförmigen Filterelements führen. Vorteilhaft kann der erste Fluidpfad radial von einem Außenbereich in einen Innenbereich in das Filterelement führen. Diese Anordnung lässt einen Zufluss beispielsweise von Kraftstoff von außen über den Umfang des Filterelements durch das beispielsweise sterngefaltete Filtermedium des Filterkörpers zu. Der Kraftstoff kann dann das Filterelement nach innen durchströmen und über den Innenbereich des Filterelements in die Kraftstoffzuführung einer Brennkraftmaschine abgeführt werden.

Vorteilhafterweise kann das Filterelement an einer der ersten Endscheibe gegenüberliegenden Seite mit einer zweiten Endscheibe versehen sein, wobei die Fluidleitung mit der zweiten Endscheibe verbunden sein kann. Auf diese Weise lässt sich eine effektive konstruktive Versteifung des Filterelements selbst und der Fluidleitung mit geringem Aufwand darstellen.

In einer günstigen Ausgestaltung kann die Fluidleitung mit einer Dichtung, beispielsweise einer O-Ring-Dichtung oder auch einer anderen Formdichtung, beim Einbau in ein Filtergehäuse abdichtbar sein. Dadurch ist gewährleistet, dass die Entlüftungsleitung von der Reinseite des Filtersystems vollständig getrennt ist. Weiter ist dadurch ein leichter und schneller Wechsel des Filterelements im Wartungsfall gegeben, indem die Fluidleitung einfach aus ihrer Aufnahme im Filtergehäuse herausgezogen wird.

Vorteilhafterweise kann die Fluidleitung mit einer Ablaufvorrichtung zur Trennung von erstem und zweitem Fluid beim Ausbau des Filterelements aus einem Filtergehäuse versehen sein. Damit wird beim Wechsel des Filterelements im Wartungsfall ein Übertreten des ersten Fluids in die Aufnahme der Fluidleitung im Filtergehäuse und dadurch in den zweiten Fluidpfad wirksam verhindert.

In einer vorteilhaften Ausgestaltung kann das Filterelement - wie bereits erläutert - mit mindestens zwei Dichtungen, beispielsweise O-Ring-Dichtungen oder auch anderen Formdichtungen, zur Trennung von Schmutzseite und Reinseite des ersten Fluidpfads beim Ausbau des Filterelements aus einem Filtergehäuse abdichtbar sein, wobei das Filterelement beim bestimmungsgemäßen Einbau in ein Filtersystem über eine an der ersten Endscheibe angeordnete Schnellkupplung mit einem zu koppelnden Filtergehäuse verbunden ist. Dadurch, dass eine O-Ring-Dichtung so lange ihre Dichtfunktion beibehält, bis das erste Fluid auf der Schmutzseite beispielsweise über eine Ablaufrinne abgelaufen ist, wird verhindert, dass ein Teil des ersten Fluids von der Schmutzseite auf die Reinseite des Filtersystems gerät und damit das Kraftstoffsystem einer Brennkraftmaschine verschmutzen kann. Ein Gehäuseoberteil kann mit der Schnellkupplung, beispielsweise einer Bajonettverbindung, zuverlässig und schnell mit dem Filterelement verbunden werden und so das Filtersystem dicht verschließen. Auch ist auf diese Weise eine sichere Demontage des Filterelements gegeben, da auf diese Weise das Filterelement mit dem Gehäuseoberteil aus dem Filtergehäuse entnommen werden kann.

Günstigerweise kann das Filterelement mit einer Wasserabscheidevorrichtung versehen sein, welche einen so genannten Koaleszer umfasst, welcher konzentrisch um die Fluidleitung auf einer Reinseite des Filterelements angeordnet ist, sowie einen Endabscheider, welcher konzentrisch um die Fluidleitung zwischen Koaleszer und Fluidleitung angeordnet ist. Kraftstoff als erstes Fluid beispielsweise kann einen gewissen Anteil an Wasser enthalten, der eine Beschädigung der Einspritzanlage einer Brennkraftmaschine hervorrufen kann. Um dies zu verhindern, kann das enthaltene Wasser auf der Reinseite des Filtersystems, beispielsweise über eine Drallvorrichtung, wobei das erste Fluid dabei in Rotation versetzt wird, und damit über die unterschiedliche spezifische Dichte des Wassers vom Kraftstoff getrennt werden und separat abfließen. Alternativ dazu dient der Koaleszer der Agglomeration von kleinen Wassertröpfchen zu größeren Wassertropfen, die dann an einem Endabscheider auf Grund der Gravitation sich sammeln und ablaufen können. Bei der Wasserabscheidung wirken der Koaleszer, die Geometrie des Sedimentationsraums der Wassertröpfchen und der Endabscheider zusammen, die gemeinsam die Wasserabscheidevorrichtung bilden.

Günstigerweise kann der erste Fluidpfad zum Filtern von Kraftstoff dienen. Alternativ ist der Einsatz einer solchen Konfiguration für andere flüssige Fluide, die gefiltert werden müssen, denkbar. Natürlich werden auch solche Filtersysteme für andere flüssige Fluide üblicherweise Entlüftungssysteme vorgesehen, so dass der Einsatz der vorgeschlagenen Entlüftungsfunktion auch beim Filtern anderer Fluide denkbar ist.

Die Erfindung betrifft nach einem weiteren Aspekt ein Filtersystem mit einem Filterelement, wobei das Filterelement wechselbar in einem Filtergehäuse des Filtersystems angeordnet sein kann und welches Filtersystem eine Aufnahme für eine Fluidleitung und/oder eine Aufnahme für ein Rückschlagventil vorsehen kann. Da Filterelemente eines Filtersystems im Rohfluidbereich, d.h. im Bereich eines ungefilterten Fluids, üblicherweise in regelmäßigen Wartungsintervallen ausgetauscht werden müssen, ist es zweckmäßig, wenn das Filterelement wechselbar vorgesehen ist.

Vorteilhafterweise kann in einem solchen Filtersystem die üblicherweise gewünschte Dauerentlüftung des Filtersystems einer Brennkraftmaschine mit einem Rückschlagventil ausgestattet werden. Auf diese Weise kann bei abgeschalteter Brennkraftmaschine, beispielsweise im Start/Stopp-Betrieb, der Kraftstoff im Filtersystem gehalten werden und verhindert werden, dass eventuell in einem Tankrücklauf vorhandene Luft über das Filtersystem in das Kraftstoffführungssystem der Brennkraftmaschine gelangt. Wenn die Brennkraftmaschine nicht läuft, kann so die Entlüftung des Filtersystems verschlossen bleiben. Wird die Brennkraftmaschine gestartet, und bei Start/Stopp-Betrieb ist üblicherweise eine sehr kurze Motorstartzeit wünschenswert, kann im Filtersystem sofort der notwendige Systemdruck im Kraftstoffführungssystem für eine Zündfreigabe aufgebaut werden. Der Systemdruck ermöglicht ein Öffnen des Rückschlagventils und das Filtersystem kann wieder dauerhaft entlüftet werden. Der große Vorteil ist also, dass kurze Motorstartzeiten ermöglicht werden, dadurch, dass der Kraftstoff im Filtersystem verbleibt.

In einer vorteilhaften Ausgestaltung kann das Filtersystem so beschaffen sein, dass der zweite Fluidpfad des Filterelements zur Entlüftung eines Kraftstoffführungssystems einer Brennkraftmaschine vorgesehen ist. Gerade bei Brennkraftmaschinen, bei denen der Startvorgang in relativ kurzer Zeit erfolgen sollte, wie beim Start/Stopp-Betrieb heutiger Brennkraftmaschinen, ist ein solches Entlüftungssystem von großem Vorteil, da es den Kraftstoff bei abgeschalteter Brennkraftmaschine im Filtersystem hält und so kurze Startzeiten ermöglicht.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Längsschnitt durch ein Filtersystem nach einem Ausführungsbeispiel der Erfindung für die Kraftstofffilterung in einem Kraftfahrzeug;
- Fig. 2: eine vergrößerte Ansicht des oberen Teils des Längsschnitts von Fig. 1 mit Details zur Anordnung einer Fluidleitung sowie eines Rückschlagventils des Filtersystems;
- Fig. 3: einen Längsschnitt durch ein Filtersystem nach einem anderen Ausführungsbeispiel für die Kraftstofffilterung in einem Kraftfahrzeug mit einer direkten Anordnung eines Rückschlagventils in einer Fluidleitung;
- Fig. 4: eine vergrößerte Ansicht des oberen Teils des Längsschnitts von Fig. 3 mit Details zur Anordnung eines Rückschlagventils für die Entlüftung in einer Fluidleitung;
- Fig. 5: einen Längsschnitt durch ein Filtersystem nach einem weiteren Ausführungsbeispiel für die Kraftstofffilterung in einem Kraftfahrzeug mit zwei O-Ringen zur Abdichtung eines Filterelements gegen ein Filtergehäuse;
- Fig. 6: einen Längsschnitt durch ein Filterelement mit Wasserabscheidefunktion, wie es in dem in Figur 5 dargestellten Filtersystem verwendbar ist;
- Fig. 7: einen Längsschnitt durch ein Filterelement ohne Wasserabscheidefunktion, wie es in dem in Figur 5 dargestellten Filtersystem verwendbar ist;
- Fig. 8: eine isometrische Darstellung eines Filterelements mit einer Schnellkupplung nach einem anderen Ausführungsbeispiel der Erfindung;
- Fig. 9: einen Schnitt durch ein Filterelement nach Fig. 8;
- Fig. 10: einen Längsschnitt durch ein Filterelement mit Wasserabscheidefunktion nach einem weiteren Ausführungsbeispiel der Erfindung;
- Fig. 11: einen Längsschnitt durch ein Filtersystem mit Wasserabscheidefunktion nach einem weiteren Ausführungsbeispiel der Erfindung;
- Fig. 12: einen Längsschnitt durch ein Filtersystem nach einem weiteren Ausführungsbeispiel für die Kraftstofffilterung in einem Kraftfahrzeug mit einer Anordnung eines Rückschlagventils an einem Gehäusedeckel;
- Fig. 13: einen Längsschnitt durch das Filterelement des Filtersystems gemäß Fig. 12 und
- Fig. 14: einen Längsschnitt durch ein Filtersystem nach einem weiteren Ausführungsbeispiel für die Kraftstofffilterung in einem Kraftfahrzeug mit einer Anordnung eines Rückschlagventils in der elementfesten Fluidleitung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

Die Erfindung ist anhand eines Kraftstofffilters dargestellt, kann jedoch auch für andere Filtersysteme mit entsprechender Anpassung der Konstruktion vorgesehen sein.

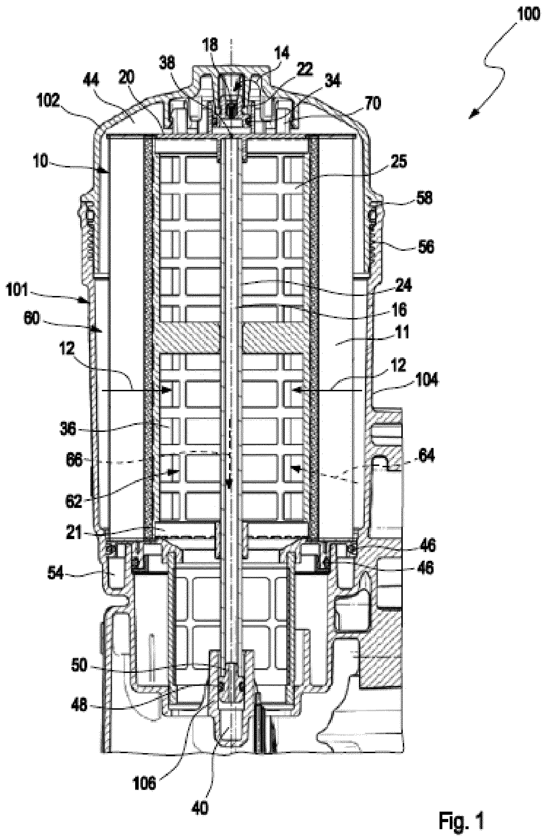

Figur 1 zeigt einen Längsschnitt durch ein Filtersystem 100 nach einem Ausführungsbeispiel der Erfindung für die Kraftstofffilterung in einem Kraftfahrzeug. Das Filtersystem 100 weist ein Filterelement 10 auf mit einem ersten Fluidpfad 12 zum Filtern eines ersten Fluids 64 von einer Rohseite 60 zu einer Reinseite 62 und einem zweiten Fluidpfad 14 mit einer Fluidleitung 16 durch eine Reinseite 62 zur Führung eines zweiten, mit der Rohseite 60 in Verbindung stehenden, Fluids 66, welches Filterelement 10 mit einer ersten Endscheibe 20 versehen ist, wobei die Fluidleitung 16 zentrisch im Innenbereich 36 des Filterelements 10 angeordnet und mit der Endscheibe 20 zum gemeinsamen Ausbau, insbesondere filterelementfest, verbunden ist, und die Endscheibe 20 eine Bohrung 38 dergestalt aufweist, dass die Fluidleitung 16 über die Bohrung 38 mit einem Außenbereich 44 auf der Rohseite 60 des Filterelements 10 verbunden ist.

Bei der Inbetriebnahme des Filtersystems 100 befindet sich erst das zweite Fluid 66, also üblicherweise Luft, in der Fluidleitung 16, während im Betrieb die Fluidleitung 16 mit dem ersten Fluid 64, also beispielsweise Kraftstoff, der Rohseite 60 gefüllt ist.

Das Filtersystem 100 besteht aus einem zentralen Filtergehäuse 101 aus zwei Teilen, einem Gehäuseoberteil 102 und einem Gehäuseunterteil 104. Das Gehäuseoberteil 102 kann dabei über eine Schraubverbindung 56 mit dem Gehäuseunterteil 104 verbunden sein und über eine innenliegende O-Ring-Abdichtung 58 fixiert werden. In dem Filtergehäuse 101 sitzt zentral angeordnet ein hohlzylinderförmiges Filterelement 10, das entsprechend dem mit einem Pfeil gekennzeichneten ersten Fluidpfad 12 radial von einem Außenbereich 44 in einen Innenbereich 36 von dem ersten Fluid 64, insbesondere Kraftstoff, durchströmt wird, das dabei gefiltert wird. Die Filterung findet dabei im Filterkörper 11 des hohlzylinderförmigen Filterelements 10 statt.

In einem nicht dargestellten Ausführungsbeispiel ist eine umgekehrte Strömungsrichtung von innen nach außen mit entsprechender Anpassung der Positionen der entsprechenden Komponenten denkbar.

Das Filterelement 10 ist mit einer Schnellkupplung 70 in Form einer Schnappverbindung mit dem Gehäuseoberteil 102 verbunden und kann so beispielsweise beim Wechsel des Filterelements 10 aus Wartungsgründen mit dem abgeschraubten Gehäuseoberteil 102 aus dem Gehäuseunterteil 104 herausgezogen werden.

Der Filterkörper 11 selbst besteht vorzugsweise aus gefaltetem Filterpapier und kann wechselbar ausgeführt sein. Der Filterkörper 11 ist auf seiner Innenseite durch ein Mittelrohr 25 versteift, wodurch eine Kollapsdruckfestigkeit des Filterkörpers 11 realisiert wird. Das Filtersystem 100 kann beispielsweise über das zweigeteilte Filtergehäuse 101 zum Wechseln geöffnet werden. Das Filterelement 10 ist mit zwei O-Ring-Dichtungen 46 gegen das Gehäuseunterteil 104 abgedichtet und trennt auf diese Weise den Außenbereich 44 von dem Innenbereich 36 des ersten Fluidpfads, also die Rohseite 60 von der Reinseite 62 des Filtersystems 100. Über den Innenbereich 36 des Filterelements 10 fließt das gefilterte Fluid 64 nach unten ab und wird weiter beispielsweise zum Einspritzsystem einer Brennkraftmaschine gefördert. Nach Entfernen des Gehäuseoberteils 102 kann das Filterelement 10 nach oben herausgezogen werden, wobei durch die Anordnung der beiden O-Ring-Dichtungen 46 das auf der Rohseite 60 sich noch befindliche erste Fluid 64 im Außenbereich 44 des Filtersystems 100 über eine Leerlaufrinne 54 ablaufen kann und nicht auf die Reinseite 62, also den Innenbereich 36 des Filterelements 10 und damit in die Brennkraftmaschine gelangen kann. Am oberen Ende des Filterelements 10 ist eine erste Endscheibe 20 angebracht, die flächig auf dem Filterelement 10 dicht aufliegt und an die sich im Innenbereich 36 des Filterelements eine Fluidleitung 16 anschließt. Die Fluidleitung 16 ist am unteren Ende mit einer O-Ring-Dichtung 48 in eine Aufnahme 106 des Gehäuseunterteils 104 eingeführt. Ebenfalls an dem unteren Ende der Fluidleitung 16 ist eine Ablaufvorrichtung 50 angebracht, welche bei einem Wechsel des Filterelements 10 durch Trennung von erstem 64 und zweitem Fluid 66 die Reinseite 62 des Tanksystems vor Verschmutzung schützt. In der oberen Endscheibe 20 ist zentral ein Rückschlagventil 18, das an der oberen Endscheibe 20 und/oder am Gehäuseoberteil 102 über eine Schnappverbindung 22 fixiert sein kann, angeordnet und über eine O-Ring-Dichtung 34 gegen die obere Endscheibe 20 abgedichtet. Das Rückschlagventil 18 ist zweckmäßigerweise als Mindestdruckventil mit Rückschlagfunktion und einem Öffnungsdruck von größenordnungsmäßig 0,4 bar ausgeführt und ist üblicherweise während des Betriebs einer Brennkraftmaschine immer offen. Ein zweiter Fluidpfad 14, der zur Entlüftung des Filtersystems 100 dienen kann, führt so über den Außenbereich 44 des Filterelements 10 in das Rückschlagventil 18 und durch eine Bohrung 38 in der oberen Endscheibe 20, die als Drosselbohrung zur Einstellung eines definierten Strömungswiderstandes dient und vorzugsweise in der Größenordnung 0,5 mm ausgeführt ist, in die Fluidleitung 16. Von einem Tanksystem mit dem Kraftstoff mitgeförderte Luft kann so über das Rückschlagventil 18 und die Fluidleitung 16 über einen Auslass 40 wieder aus dem Filtersystem 100 herausgeführt werden. Wird eine an das Filtersystem 100 angeschlossene Brennkraftmaschine abgestellt, beispielsweise in einem Start/Stopp-Betrieb, und demzufolge kein Kraftstoff aus dem entsprechenden Tanksystem nachgeliefert, so kann sich das Rückschlagventil 18 schließen. Damit bleibt der Druck im Filterelement 10 erhalten, und der Kraftstoff verbleibt im Filtersystem 100. Dadurch sind die Voraussetzungen für einen schnellen Start der Brennkraftmaschine gegeben. Nach dem Wiederöffnen des Rückschlagventils 18 kann die Entlüftung des Filtersystems 100 wieder in Funktion treten.

An der der ersten Endscheibe 20 gegenüberliegenden Seite ist das Filterelement 10 mit einer zweiten Endscheibe 21 versehen, wobei die Fluidleitung 16 mit der zweiten Endscheibe 21 verbunden ist.

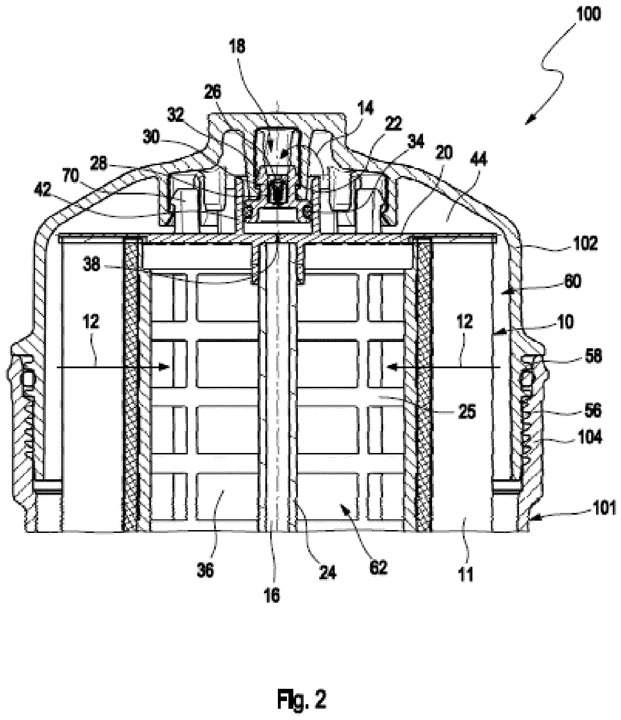

Figur 2 stellt eine vergrößerte Ansicht des oberen Teils des Längsschnitts von Figur 1 mit Details zur Anordnung einer Fluidleitung 16 sowie eines Rückschlagventils 18 in der ersten Endscheibe 20 des Filterelements 10 dar. Das Rückschlagventil 18 selbst ist mit seinem Ventilkörper 30 in einen Ventilträger 32 eingebettet, beispielsweise eingepresst. Der Ventilträger 32 seinerseits ist über eine O-Ring-Dichtung 34 in eine entsprechende Aufnahme 42 der Endscheibe 20 eingesetzt und stellt so eine dichte Verbindung zur Endscheibe 20 her. Der Ventilträger 32 kann über eine Rastverbindung 60 an dem Gehäuseoberteil 102 fixiert sein, sodass das Rückschlagventil 18 beim Abziehen des Gehäuseoberteils 102 aus der Aufnahme 42 der oberen Endscheibe 20 herausgezogen wird und im Gehäuseoberteil 102 verbleibt. Der Ventilkörper 30 zeigt im Schnitt die übliche Ausführung eines Rückschlagventils mit einer Kugel 26, die über eine Feder 28 in einen Ventilsitz gedrückt wird. Die Endscheibe 20 wiederum sitzt dicht auf dem Filterelement 10 und hat über die Bohrung 38 Verbindung zu dem als Fluidleitung 16 ausgeführten Stützrohr 24. Der zweite Fluidpfad 14 zur Entlüftung des Filtersystems 100 führt so über den Außenbereich 44 des Filterelements 10 durch das Rückschlagventil 18 über die Bohrung 38 in das als Fluidleitung 16 ausgeführte Stützrohr 24 des Filterelements 10.

In Figur 2 ist auch die Schnellkupplung 70 in Form einer Schnappverbindung, mit der das Filterelement 10 mit dem Gehäuseoberteil 102 verbunden ist und mit diesem aus dem Gehäuseunterteil 104 herausgezogen werden kann, zu erkennen.

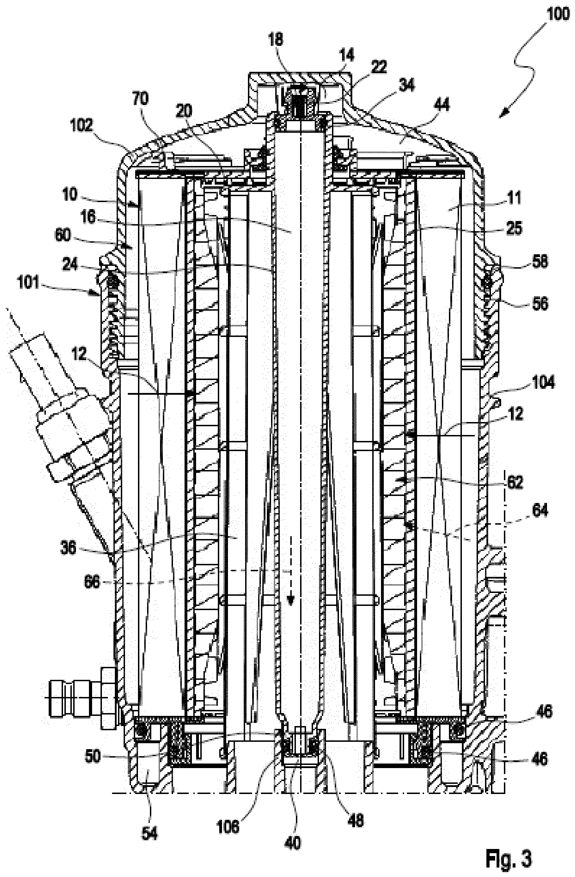

In Figur 3 ist ein Längsschnitt durch ein Filtersystem 100 nach einem anderen Ausführungsbeispiel der Erfindung für die Kraftstofffilterung in einem Kraftfahrzeug mit einer direkten Anordnung eines Rückschlagventils 18 in einer Fluidleitung 16 dargestellt. Der Aufbau des Filtersystems 100 ist ähnlich wie bei dem in Figur 1 dargestellten Filtersystem mit einer Strömungsrichtung von außen nach innen, die durch radiale Pfeile von einem Außenbereich 44 in einen Innenbereich 36 durch das Filterelement 10, also von einer Rohseite 60 in eine Reinseite 62 des Filtersystems 100, angedeutet ist.

Ein hohlzylinderförmiges Filterelement 10 ist in einem zweiteiligen Filtergehäuse 101 angeordnet, wobei das Filterelement 10 wechselbar ausgeführt sein kann. Das Filtersystem 100 kann beispielsweise über das zweigeteilte Filtergehäuse 101 zum Wechseln geöffnet werden. Das Gehäuseoberteil 102 kann dabei über eine Schraubverbindung 56 mit dem Gehäuseunterteil 104 verbunden sein und über eine innenliegende O-Ring-Abdichtung 58 fixiert werden.

Das Filterelement 10 ist mit einer Schnellkupplung 70 in Form einer Bajonettverbindung mit dem Gehäuseoberteil 102 verbunden und kann so beispielsweise beim Wechsel des Filterelements 10 aus Wartungsgründen mit dem abgeschraubten Gehäuseoberteil 102 aus dem Gehäuseunterteil 104 herausgezogen werden.

Ein erster Fluidpfad 12 zeigt den Weg des zu filternden ersten Fluids, beispielsweise Kraftstoff, von einem Außenbereich 44 des Filterelements 10 radial durch den Umfang in einen Innenbereich 36, also von einer Rohseite 60 zu einer Reinseite 62 des Filtersystems 100. Im Unterschied zu dem in Figur 1 dargestellten Filtersystem ist hier jedoch das Rückschlagventil 18 direkt in der Fluidleitung 16, die wiederum im Stützrohr 24 ausgebildet ist, angeordnet und schließt mit dem Stützrohr 24 über eine O-Ring-Dichtung 34 radial dicht ab. Das Rückschlagventil 18 kann über seinen Ventilträger 32 mit einer Schnappverbindung 22 an dem Gehäuseoberteil 102 fixiert sein. Das Stützrohr 24 ist integraler Bestandteil des Filterelements 10 und mit der ersten Endscheibe 20 verbunden. Der zweite Fluidpfad 14 zur Entlüftung des Filtersystems 100 führt in analoger Weise zur Figur 1 vom Außenbereich 44 des Filterelements 10 durch das Rückschlagventil 18 in die Fluidleitung 16, die ebenfalls in einen Auslass 40 mündet. Die Fluidleitung 16 ist am unteren Ende mit einer O-Ring-Dichtung 48 in eine Aufnahme 106 des Gehäuseunterteils 104 eingeführt. Ebenfalls an dem unteren Ende der Fluidleitung 16 ist eine Ablaufvorrichtung 50 angebracht, welche bei einem Wechsel des Filterelements 10 durch Trennung von erstem 64 und zweitem Fluid 66 die Reinseite des Tanksystems vor Verschmutzung schützt. Beim Wechseln des Filterelements 10 aus dem Gehäuseunterteil 104 kann wie bei der Ausführungsform in Figur 1 durch die Anordnung der beiden O-Ring-Dichtungen 46 das im Rohbereich sich noch befindliche erste Fluid 64 auf der Rohseite 60 des Filtersystems 100 über eine Leerlaufrinne 54 ablaufen kann und nicht auf die Reinseite 62, also den Innenbereich 36 des Filterelements 10 und damit in die Brennkraftmaschine gelangen.

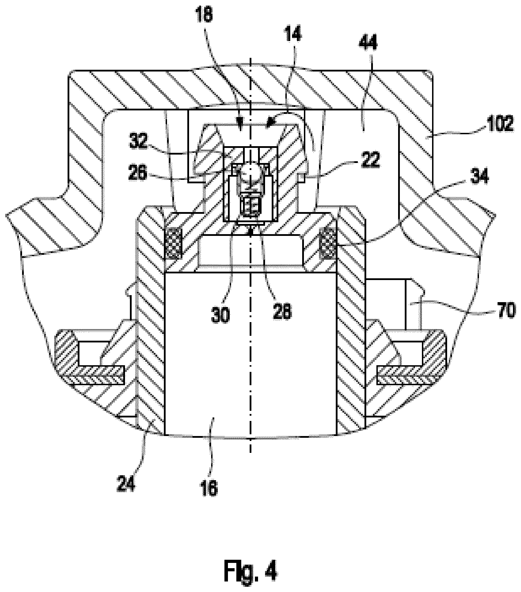

Figur 4 zeigt eine vergrößerte Ansicht des oberen Teils des Längsschnitts von Figur 3 mit Details zur Anordnung des Rückschlagventils 18 für die Entlüftung in der Fluidleitung 16. Das Rückschlagventil 18 ist mit seinem Ventilträger 32, in dem der Ventilkörper 30 angeordnet ist, direkt in die Fluidleitung 16, die im Stützrohr 24 ausgebildet und gegenüber dem Filterelement 10 mit einer O-Ring-Dichtung 34 radial abgedichtet ist, eingesetzt, beispielsweise eingepresst. Alternativ kann das Rückschlagventil 18 auch im Gehäuseoberteil 102 angeordnet sein und dort beispielsweise über eine Schnappverbindung 22 befestigt sein. Wird das Gehäuseoberteil 102 dann auf das in das Gehäuseunterteil 104 eingesetzte Filterelement 10 aufgesetzt, so kann das Rückschlagventil 18 in die im Stützrohr 24 ausgeführte Fluidleitung 16 geschoben und über die O-Ring-Dichtung 34 abgedichtet werden. Der zweite Fluidpfad 14 zur Entlüftung des Filtersystems 100 führt so in analoger Weise zu dem in Figur 1 dargestellten Filtersystem vom Außenbereich 44 des Filterelements 10 über das Rückschlagventil 18, dessen Funktion durch eine über eine Feder 28 in einen Ventilsitz gepresste Kugel 26 dargestellt wird, in das als Fluidleitung 16 ausgebildete Stützrohr 24, von wo die Luft in das Tanksystem wieder zurückgeleitet werden kann. Die Funktionsweise des Rückschlagventils 18 erfolgt in analoger Weise zu dem in Figur 1 dargestellten Filtersystem. Wird eine an das Filtersystem 100 angeschlossene Brennkraftmaschine, beispielsweise in einem Start/Stopp-Betrieb, abgestellt und demzufolge kein Kraftstoff aus einem Tanksystem nachgeliefert, so kann sich das Rückschlagventil 18 schließen. Damit bleibt der Druck im Filterelement 10 erhalten, der Kraftstoff bleibt im Filtersystem 100. Dadurch sind die Voraussetzungen für einen kurzzeitigen Start der Brennkraftmaschine gegeben. Nach Wiederöffnen des Rückschlagventils 18 kann die Entlüftung des Filtersystems 100 wieder in Funktion treten.

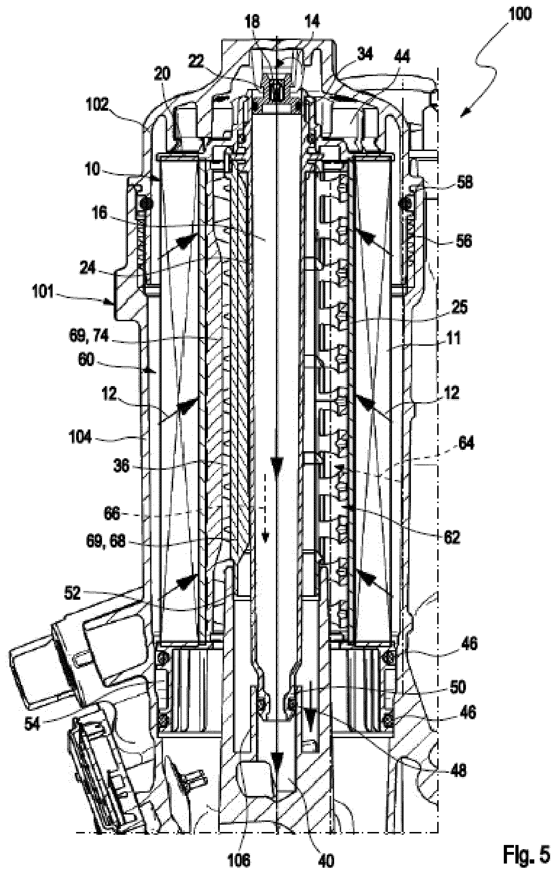

In Figur 5 ist ein Längsschnitt durch ein Filtersystem 100 nach einem weiteren Ausführungsbeispiel der Erfindung für die Kraftstofffilterung in einem Kraftfahrzeug mit zwei O-Ringen 46 zur Abdichtung eines Filterelements 10 gegen ein Filtergehäuse 101 dargestellt. Der Aufbau des Filtersystems 100 ist ähnlich wie bei dem in Figur 3 dargestellten Filtersystem mit einer Strömungsrichtung von außen nach innen, die durch Pfeile von einem Außenbereich 44 in einen Innenbereich 36 in das Filterelement 10, also von einer Rohseite 60 zu einer Reinseite 62 des Filtersystems 100, angedeutet ist und unterscheidet sich von dem in Figur 3 dargestellten Ausführungsbeispiel dadurch, dass die Aufnahme des Filterelements 10 im Gehäuseunterteil 104 anders gestaltet ist. Das Filterelement 10 weist zwei O-Ring-Dichtungen 46 auf, die auf demselben Durchmesser liegen und eine Leerlaufrinne 54 dicht abschließen. Beim Wechseln des Filterelements 10 und damit beim Herausziehen des Filterelements 10 aus dem Gehäuseunterteil 104 kann das sich noch im Außenbereich 44 befindliche erste Fluid 64 über diese Leerlaufrinne 54 abfließen, sodass das es nicht auf die Reinseite 62, also den Innenbereich 36 des Filterelements 10 und damit in die Brennkraftmaschine gelangen kann.

Das Filterelement 10 ist mit einer Schnellkupplung 70 in Form einer Schnappverbindung wie bei dem in Figur 1 dargestellten Ausführungsbeispiel mit dem Gehäuseoberteil 102 verbunden und kann so beispielsweise beim Wechsel des Filterelements 10 aus Wartungsgründen mit dem abgeschraubten Gehäuseoberteil 102 aus dem Gehäuseunterteil 104 herausgezogen werden.

Das sonstige funktionale Verhalten des Filtersystems 100 nach dem in Figur 5 dargestellten Ausführungsbeispiel entspricht dem in Figur 3 dargestellten Ausführungsbeispiel. Auch hier wird die Fluidleitung 16 am unteren Ende mit einer O-Ring-Dichtung 48 in eine Aufnahme 106 des Gehäuseunterteils 104 eingeführt. Ebenfalls an dem unteren Ende der Fluidleitung 16 ist eine Ablaufvorrichtung 50 angebracht, welche bei einem Wechsel des Filterelements 10 durch Trennung von erstem und zweitem Fluid die Reinseite des Tanksystems vor Verschmutzung schützt.

Koaxial zum Stützrohr 24 ist eine Wasserabscheidevorrichtung 69 zu erkennen, die einen Koaleszer 74, welcher konzentrisch um die Fluidleitung 16 auf einer Reinseite 62 des Filterelements 10 angeordnet ist, sowie einen Endabscheider 68, welcher konzentrisch um die Fluidleitung 16 zwischen Koaleszer 74 und Fluidleitung 16 angeordnet ist, umfasst. Der Endabscheider 68 weist am unteren Ende eine Dichtlippe 52 zur Verbindung mit einem Auslass auf, worüber abgeschiedenes Wasser in einen Wassersammelraum geführt werden kann. Der Endabscheider 68 stützt sich dabei durch Anlegen an dem Stützrohr 24, das zur Entlüftung des Filterelements 10 dient, ab.

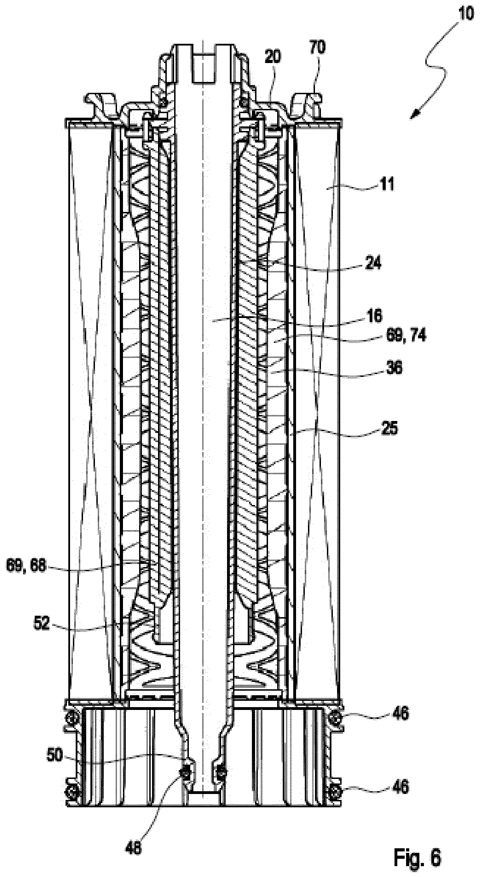

Figur 6 zeigt einen Längsschnitt durch ein Filterelement 10 mit Wasserabscheidefunktion, wie es in dem in Figur 5 dargestellten Filtersystem 100 verwendbar ist. Das Filterelement 10, das als oberen Abschluss eine erste Endscheibe 20 aufweist, wird über ein zentrales Stützrohr 24, das als Fluidleitung 16 wirkt, versteift. Das Stützrohr 24 weist am unteren Ende eine O-Ring-Dichtung 48 zum Abdichten beim Einsetzen in ein Filtergehäuse 101, sowie eine Ablaufvorrichtung 50 zur Trennung von erstem 64 und zweitem Fluid 66 beim Wechsel des Filterelements 10 und damit Entfernen aus dem Filtergehäuse 101. Die Abdichtung des Filterelements 10 selbst zum Filtergehäuse 101 geschieht über die zwei auf demselben Durchmesser liegenden O-Ring-Dichtungen 46, die zur Trennung von Rohseite 60 und Reinseite 62 des Filterelements 10 beim Wechsel durch Abfließen des auf der Rohseite 60 sich noch befindlichen ersten Fluids 64 über eine Leerlaufrinne 54 dienen. Koaxial zum Stützrohr 24 ist eine Wasserabscheidevorrichtung 69 zu erkennen, die einen Koaleszer 74 sowie einen Endabscheider 68 umfasst, der am unteren Ende eine Dichtlippe 52 zur Verbindung mit einem Auslass aufweist, worüber abgeschiedenes Wasser separat in einen Sammelraum geführt werden kann. Der Endabscheider 68 stützt sich dabei durch Anlegen an dem Stützrohr 24 ab. Die Endscheibe 20 trägt Bajonettelemente einer Schnellkupplung 70 zum Verbinden des Filterelements 10 mit dem Gehäuseoberteil 102.

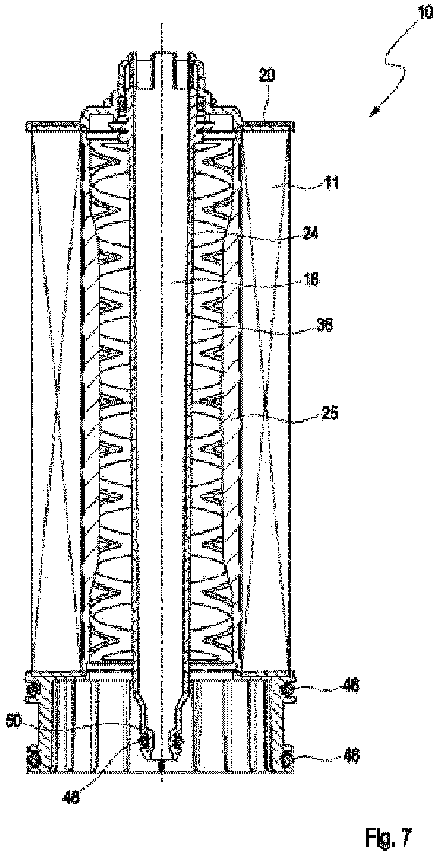

Figur 7 zeigt einen Längsschnitt durch ein Filterelement 10 ohne Wasserabscheidefunktion, wie es in dem in Figur 5 dargestellten Filtersystem 100 verwendbar ist. Das Filterelement 10 weist dieselben Merkmale wie das in Figur 6 dargestellte Filterelement 10 auf, bis auf die fehlende Wasserabscheidevorrichtung 69 zur Wasserabscheidung, so dass zur Vermeidung unnötiger Wiederholungen auf die betreffenden Figuren verwiesen wird.

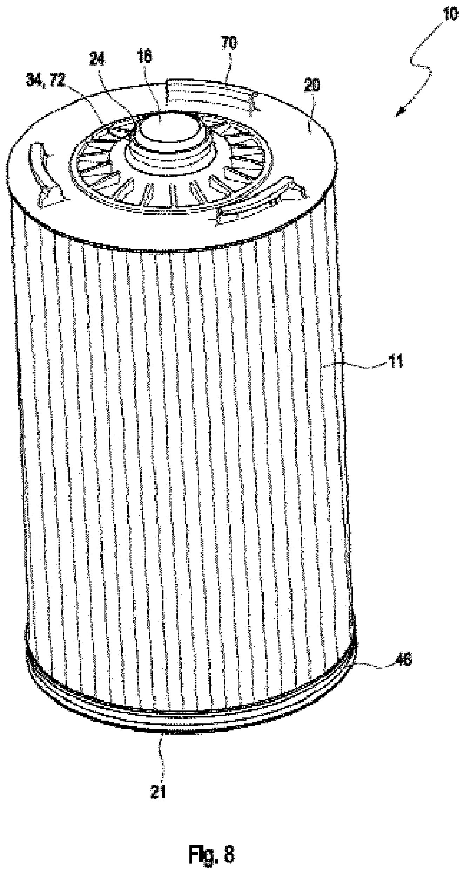

In Figur 8 ist eine isometrische Darstellung eines Filterelements 10 mit einer Schnellkupplung 70 nach einem anderen Ausführungsbeispiel der Erfindung gezeigt. Das Filterelement 10 weist auf der oberen Endscheibe 20 Verbindungselemente einer Schnellkupplung 70 auf, die in Form von Bajonetthaken ausgeführt sind. Mit diesen Bajonetthaken kann eine schnelle und sichere Verbindung zu einem Gehäuseoberteil 102 hergestellt werden, an dem das Filterelement 10 bei einem Wechsel des Filterelements 10, beispielsweise zu Wartungszwecken, auch aus einem Gehäuseunterteil 104 entnommen werden kann. Zentrisch ragt über die obere Endscheibe 20 des Filterelements 10 ein Stützrohr 24 als Fluidleitung 16 heraus, das am oberen Rand eine Dichtung 34 in Gestalt einer Formdichtung 72, welche dicht um das Stützrohr 34 angeordnet ist, trägt. Die untere Endscheibe 21, welche den Filterkörper 11 nach unten abschließt, weist an ihrem äußeren Umfang eine Dichtung 46 zur Trennung von Reinseite 62 und Rohseite 60 des Filterelements 10 beim Einbau in ein Filtergehäuse 101 auf.

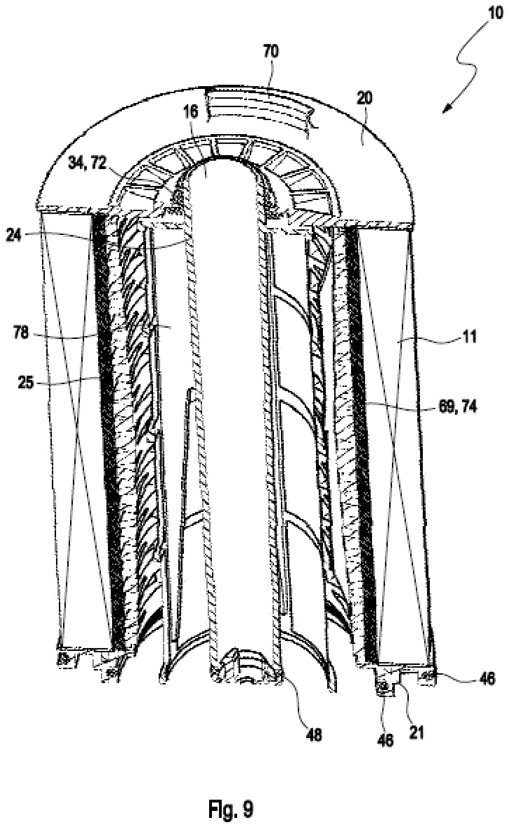

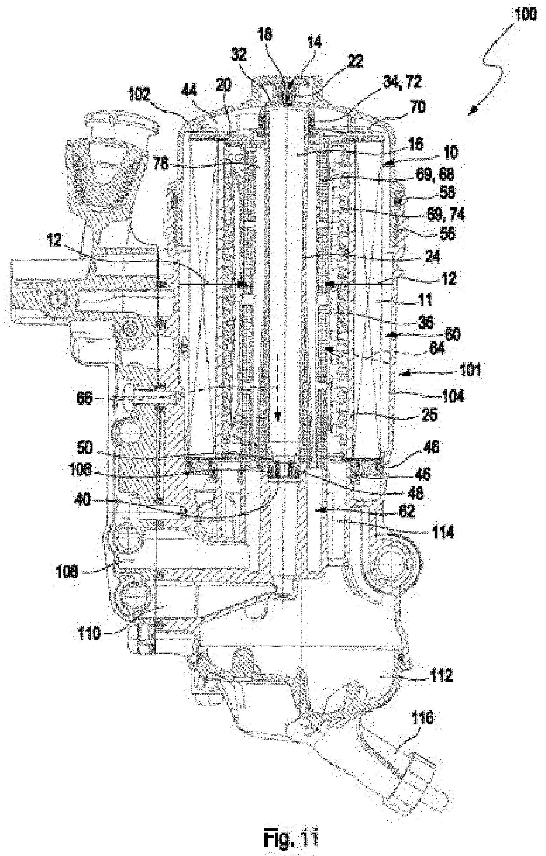

Figur 9 zeigt einen Schnitt durch das Filterelement 10, wie es in Figur 8 dargestellt ist. In der Schnittdarstellung ist zu erkennen, dass die Dichtung 46 an der unteren Endscheibe 21 aus zwei einzelnen Dichtungen 46 in Form von O-Ringen besteht, die den Filterkörper 11 auf seiner Außenseite und seiner Innenseite abdichten und so die Rohseite 60 gegen die Reinseite 62 des Filterelements 10 trennen. Die Innenseite des Filterkörpers 11 wird durch ein Mittelrohr 25 gestützt, welches an seiner Innenseite wiederum einen Koaleszer 74 einer Wasserabscheidevorrichtung 69 trägt. Die Abscheidung der koagulierten Wassertropfen geschieht dann an dem Endabscheider 68 der Wasserabscheidevorrichtung 69 (siehe Figur 11), der konzentrisch um das Stützrohr 16 angeordnet ist und mit einer Versteifungsrippe 78 mit diesem verbunden ist. Im Schnitt ist auch die Formdichtung 72 am oberen Ende des Stützrohrs 16 deutlich zu erkennen, welche beim Wechsel des Filterelements 10 an diesem verbleibt und so mit dem Filterelement 10 auch getauscht wird.

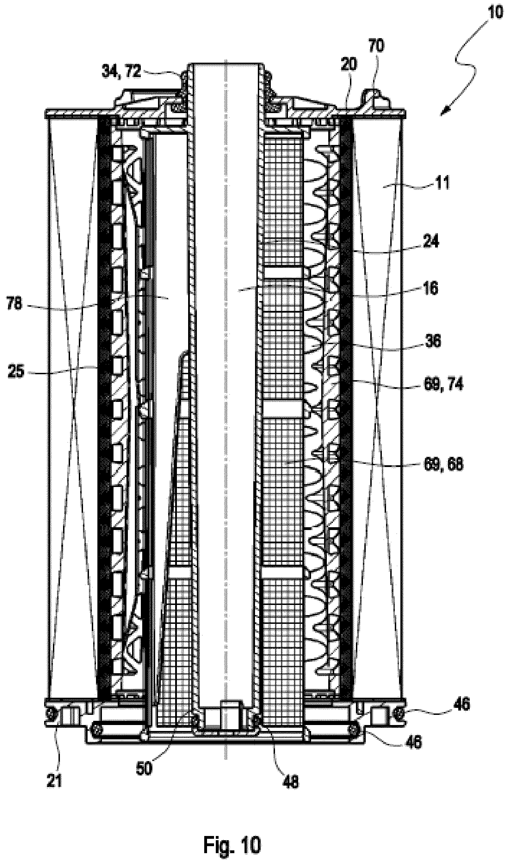

Figur 10 stellt einen Längsschnitt durch ein Filterelement 10 mit Wasserabscheidefunktion nach einem weiteren Ausführungsbeispiel der Erfindung dar und entspricht der isometrischen Darstellung aus Figur 9.

Figur 11 zeigt einen Längsschnitt durch ein Filtersystem 100 mit Wasserabscheidefunktion nach einem weiteren Ausführungsbeispiel der Erfindung. Der Aufbau des Filtersystems 100 ist ähnlich wie bei dem in Figur 5 dargestellten Filtersystem mit einer Strömungsrichtung von außen nach innen, die durch Pfeile von einem Außenbereich 44 in einen Innenbereich 36 in das Filterelement 10, also von einer Rohseite 60 zu einer Reinseite 62 des Filtersystems 100, angedeutet ist und unterscheidet sich von dem in Figur 5 dargestellten Ausführungsbeispiel dadurch, dass die Aufnahme des Filterelements 10 im Gehäuseunterteil 104 anders gestaltet ist.

Das Filterelement 10 weist an seiner unteren Endscheibe 21 zwei O-Ring-Dichtungen 46 auf, die den Filterkörper 11 auf seiner Außenseite und seiner Innenseite jeweils abdichten und so die Rohseite 60 von der Reinseite 62 trennen. Beim Wechseln des Filterelements 10 und damit beim Herausziehen des Filterelements 10 aus dem Gehäuseunterteil 104 kann das sich noch im Außenbereich 44 befindliche erste Fluid 64 über eine Leerlaufrinne 54 abfließen, sodass das es nicht auf die Reinseite 62, also den Innenbereich 36 des Filterelements 10 und damit in die Brennkraftmaschine gelangen kann. Das Filterelement 10 ist über eine Schnellkupplung 70 in Form einer Bajonettverbindung mit dem Gehäuseoberteil 102 verbunden und kann so mit dem Gehäuseoberteil 102 bei einem Wechsel des Filterelements 10 zu Wartungszwecken aus dem Gehäuseunterteil 104 entnommen werden. Das Rückschlagventil 18 des zweiten Fluidpfads 14 sitzt in dem Ventilträger 32, der wiederum mit einer Schnappverbindung 22 mit dem Gehäuseoberteil 102 verbunden ist. Im Gegensatz zu den anderen dargestellten Ausführungsformen in den Figuren 1, 3, 5 ist der Ventilträger 32 glockenförmig ausgeführt und kann so über die Formdichtung 72 gleiten, um so den zweiten Fluidpfad 14 der Fluidleitung 16, welche in dem Stützrohr 24 ausgebildet ist, abzudichten. Bei einem Wechsel des Filterelements 10 kann dieses so mit dem Gehäuseoberteil 102 herausgezogen werden. Dabei verbleibt der Ventilträger 32 mit dem Rückschlagventil 18 auf der Formdichtung 72. Wenn das Filterelement 10 ganz aus dem Gehäuseunterteil 104 entfernt ist, kann das Gehäuseoberteil 102 über die Schnellkupplung 70 abgenommen werden mit dem Ventilträger 32 und dem darin angeordneten Rückschlagventil 18 von dem Filterelement 10 abgezogen werden. Dabei wird auch der Ventilträger 32 von der Formdichtung 72 abgezogen, welche dabei an dem Stützrohr 24 verbleibt. Beim Einsetzen eines neuen Filterelements 10 kommt so auch eine neue Formdichtung 72 zum Einsatz.

Das sonstige funktionale Verhalten des Filtersystems 100 nach dem in Figur 5 dargestellten Ausführungsbeispiel entspricht dem in Figur 5 dargestellten Ausführungsbeispiel. Auch hier wird die Fluidleitung 16 am unteren Ende mit einer O-Ring-Dichtung 48 in eine Aufnahme 106 des Gehäuseunterteils 104 eingeführt. Ebenfalls an dem unteren Ende der Fluidleitung 16 ist eine Ablaufvorrichtung 50 angebracht, welche bei einem Wechsel des Filterelements 10 durch Trennung von erstem und zweitem Fluid die Reinseite des Tanksystems vor Verschmutzung schützt.

Koaxial zum Stützrohr 24 ist eine Wasserabscheidevorrichtung 69 zu erkennen, die einen Koaleszer 74, welcher konzentrisch um die Fluidleitung 16 auf einer Reinseite 62 des Filterelements 10 angeordnet ist, sowie einen Endabscheider 68, welcher konzentrisch um die Fluidleitung 16 zwischen Koaleszer 74 und Fluidleitung 16 angeordnet ist, umfasst. Der Endabscheider 68 stützt sich dabei durch Anlegen über das Versteifungselement 78 an dem Stützrohr 24, welches zur Entlüftung des Filterelements 10 dient, ab. Das abgeschiedene Wasser gelangt über einen Wasserabfluss 114 in einen Wassersammelraum 112, von dem aus es über einen Auslass 116 abgelassen werden kann.

Die Reinseite 62 des Filterelements 10 mündet in einen Auslass 108, von dem aus das gefilterte Fluid 64 in eine Brennkraftmaschine geleitet werden kann. Die Fluidleitung 16 mündet in einen Auslass 110, der wieder zurück in einen Tankraum geführt werden kann.

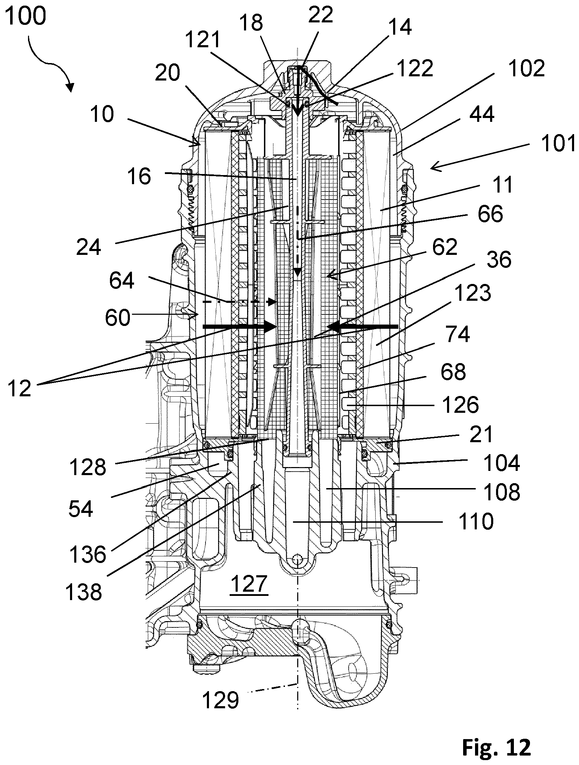

In Figur 12 ist ein Längsschnitt durch ein Filtersystem 100 nach einem weiteren Ausführungsbeispiel der Erfindung für die Kraftstofffilterung in einem Kraftfahrzeug mit einer Anordnung eines Rückschlagventils 18 an einem Gehäusedeckel 102 dargestellt. Generell entspricht das funktionale Verhalten des Filtersystems 100 nach dem in Figur 12 dargestellten Ausführungsbeispiel dem in den vorhergehenden Figuren dargestellten Ausführungsbeispielen. In dem Gehäuse 101 des Filtersystems 100 ist ein wechselbares Filterelement 10 angeordnet. Ein erster Fluidpfad 12 zeigt den Weg des zu filternden ersten Fluids 64, beispielsweise Kraftstoff, von einem Außenbereich 44 des Filterelements 10 (Rohseite 60) radial durch einen Filterkörper 11 des Filterelements 10 in einen Innenbereich 36 (Reinseite 62). Das Rückschlagventil 18 ist oberhalb des Filterkörpers 11 des Filterelements 10 angeordnet und mittels einer Schnappverbindung 22 am Gehäusedeckel 102 befestigt. Das Rückschlagventil 18 weist eine Aufnahme 121 für einen elementseitigen Rückschlagventilanschluss 122 auf. Der zweite Fluidpfad 14 zur Entlüftung des Filtersystems 100 führt vom Außenbereich 44 des Filterelements 10 durch das Rückschlagventil 18 in die elementfeste Fluidleitung 16, die in einen Auslass 40 in Form eines gehäuseseitigen Abströmkanals mündet. Im Speziellen entspricht die Funktionsweise des Rückschlagventils 18 denjenigen der bereits beschriebenen Ausführungsbeispiele.

Die Fluidleitung 16 ist Teil des wechselbaren Filterelements 10. Sie verläuft von der Stirnseite des Filterelements 10, welche im montierten Zustand oben angeordnet ist, zur gegenüberliegenden, unteren Stirnseite durch den von dem Filterkörper 11 umgebenen Innenbereich 36.

Der Filterkörper 11 weist eine sterngefaltete Filtermedienbahn auf, die zur Partikelfiltration dient. Innerhalb der sterngefaltete Filtermedienbahn ist ebenfalls ein gewickelter Koaleszer 74 vorgesehen. Auf der Koaleszer 74 folgt in Durchströmungsrichtung wiederum ein Wasserabscheideelement 68 mit z. B. einem hydrophoben Siebgewebe, das aber innerhalb des Koaleszer 74 bzw. auf dessen Höhe angeordnet ist. Zwischen dem Koaleszermedium 74 und dem Wasserabscheideelement 68 ist ein Wasserausfällringspalt 126 ausgebildet. Wasserausfällringspalt 126 ist nach unten mit einem Wassersammelbereich 112 des Filtersystems 100 verbunden. Der von dem Wasserabscheideelement 68 umgebene Innenbereich 36 ist an der unteren Stirnseite mit einem Reinkraftstoffauslass 128 versehen.

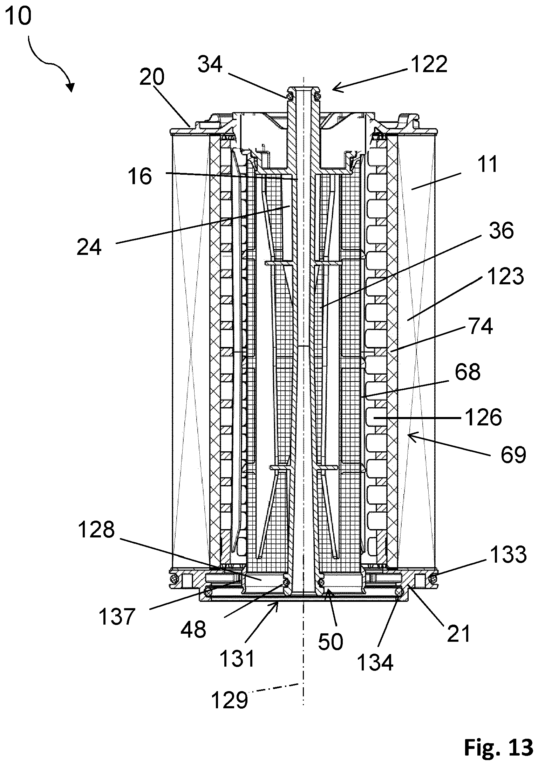

In Figur 13 ist das Filterelement 10 des Filtersystems 100 gemäß Figur 12 in Alleinstellung dargestellt. Der Rückschlagventilanschluss 122 ist als stutzenförmiger Fortsatz der Fluidleitung 16 ausgebildet, welcher an der oberen Stirnseite des Filterelements 10 vorsteht und koaxial zu der Elementlängsachse 129 angeordnet ist. Er ist mit einer radial nach außen gerichteten Dichtung in Form eines aufgezogenen O-Rings 34 zum Abdichten gegenüber dem Rückschlagventil 18 versehen.

Auf der unteren Stirnseite weist das Filterelement 10 einen Abströmanschluss 131 auf, mittels dessen die Fluidleitung 16 bei der Montage des Filterelements 10 in dem Gehäuse 101 des Filtersystems 100 an den Ablass 110 anschließbar ist. Der Abströmanschluss 131 ist ebenfalls als stutzenförmiger Fortsatz der Fluidleitung 16 ausgebildet, welcher koaxial zu der Elementlängsachse 129 angeordnet ist. Er weist eine umlaufende, radial nach außen gerichtete Dichtung in Form eines aufgezogenen O-Rings 48 auf. Ebenfalls an dem unteren Ende der Fluidleitung 16 ist insofern eine Ablaufvorrichtung 50 angebracht, welche bei einem Wechsel des Filterelements 10 durch Trennung von erstem 64 und zweitem Fluid 66 die Reinseite 62 des Tanksystems vor Verschmutzung schützt.

Des Weiteren weist das Filterelement 10 an der unteren Stirnseite zwei umlaufende Dichtungen 133, 134 auf, wobei die Dichtung 133 radial nach außen gerichtet und die Dichtungen 134 radial nach innen gerichtet ist. Die Dichtung 133 liegt an der Gehäuseinnenwand an und dient zur Abdichtung von dem äußeren Ringraum 44 zu einem als Rinne ausgebildeten Leerlaufbereich 54 (Fig. 12). Die andere Dichtung 134 liegt an einem Gehäusestutzen 136 an und dient zur Abdichtung des Wassersammelbereichs 127 gegenüber dem Leerlaufbereich 54. Der elementseitige Reinkraftstoffauslass 128 ist mit einem stützenförmigen Fortsatz 137 umgeben, der zusätzlich den Abströmanschluss 131 umgibt und auf einen gehäuseseitigen Stutzen 138 aufgesteckt ist, der einen Ringkanal des Kraftstoffauslasses 108 umschließt.

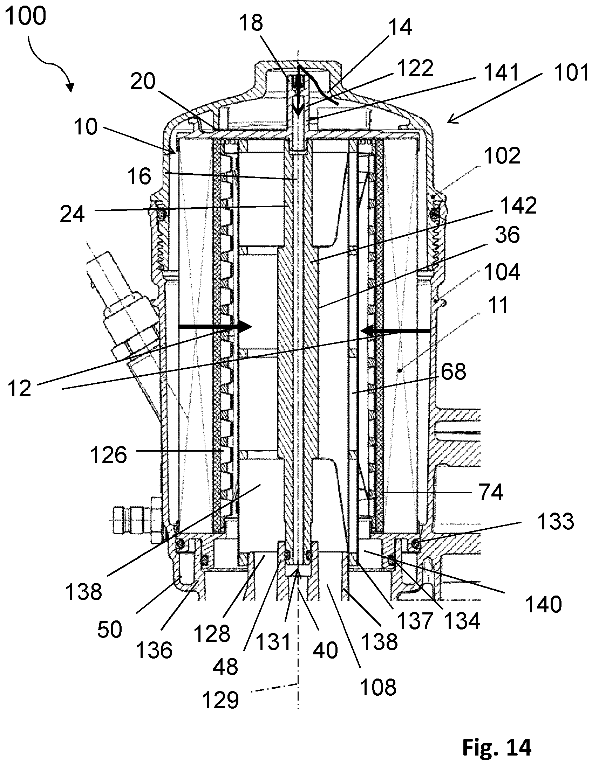

In Figur 14 ist ein Längsschnitt durch ein Filtersystem 100 nach einem weiteren Ausführungsbeispiel der Erfindung für die Kraftstofffilterung in einem Kraftfahrzeug mit einer Anordnung eines Rückschlagventils 18 in der elementfesten Fluidleitung 16 dargestellt. Die Fluidleitung 16 ist in diesem Beispiel aus einem durch an der Endscheibe 20 des Filterelements 10 vorgesehenen Abschnitt 141 und einem im Innenbereich des Filtermedienkörpers 119 verlaufenen Abschnitts 142 gebildet. Die Fluidleitung 16 wird wie bei dem Beispiel gemäß Fig. 12 gemeinsam mit dem Filterelement 10 ausgewechselt, wobei zugleich das in dem Abschnitt 141 integrierte Rückschlagventil 18 mitausgewechselt wird. Das Filtersystem 100 nach Fig. 14 ähnelt den anderen Ausführungsbeispielen in Aufbau und Funktionsweise, so dass im Übrigen auf die vorstehenden Erläuterungen verwiesen wird, wobei sich vorteilhafte Unterschiede auch aus der Fig. 14 ergeben.

## Patentansprüche

1. Filterelement (10) mit einem ersten Fluidpfad (12) auf einer Rohseite (60) zum Filtern eines ersten Fluids (64) und einem zweiten Fluidpfad (14) mit einer Fluidleitung (16) auf einer Reinseite (62) zur Führung eines zweiten Fluids (66), wobei das Filterelement (10) wenigstens einseitig mit einer ersten Endscheibe (20) versehen ist,
wobei die Fluidleitung (16) zentrisch im Innenbereich (36) des Filterelements (10) angeordnet und mit der Endscheibe (20) zum gemeinsamen Ausbau, insbesondere filterelementfest, verbunden ist, wobei das Filterelement (10) einen Abströmanschluss (131) aufweist, der als stutzenförmiger Fortsatz der Fluidleitung (16) ausgebildet und koaxial zu einer Elementlängsachse (129) angeordnet ist, wobei mittels des Abströmanschlusses (131) die Fluidleitung (16) bei der Montage des Filterelements (10) in dem Gehäuse (101) des Filtersystems (100) an einen gehäuseseitigen Abströmkanal (40) anschließbar ist,
**dadurch gekennzeichnet, dass**
im Bereich derjenigen Stirnseite des Filterelements (10), an welcher der Abströmanschluss (131) angeordnet ist,
- ein Reinfluidauslass (128) vorliegt, welcher mit einem stutzenförmigen Fortsatz (137) versehen ist, der den Abströmanschluss (131) umgibt und
- ein Wasserauslass (140) für aus dem ersten Fluid abgeschiedenes Wasser vorliegt, welcher den stutzenförmigen Fortsatz (137) des Reinfluidauslasses (128) umgibt.

2. Filterelement (10) nach Anspruch 1, wobei das Filterelement (10) die Fluidleitung (16) aufweist, die von einer Stirnseite des Filterelements (10) zur gegenüberliegenden Stirnseite des Filterelements (10) führt, vorzugsweise durch einen von einem Filterkörper (11) des Filterelements (10) umgebenen Innenbereich (36).

3. Filterelement (10) nach Anspruch 1 oder 2, wobei das Filterelement (10) einen Einströmanschluss (122) aufweist, mittels dessen die Fluidleitung (16) bei der Montage des Filterelements (10) in dem Gehäuse (101) des Filtersystems (100) insbesondere an eine Ventil- und/oder Drosseleinheit, vorzugsweise an ein Rückschlagventil (18), anschließbar ist.

4. Filterelement (10) nach Anspruch 3, wobei der Einströmanschluss (122) als stutzenförmiger Fortsatz der Fluidleitung (16) ausgebildet ist, welcher insbesondere an einer Stirnseite des Filterelements (10) vorsteht und/oder insbesondere koaxial zu einer Elementlängsachse (129) angeordnet ist.

5. Filterelement (10) nach Anspruch 3, wobei der Einströmanschluss (122) eine Dichtung (34) zur dichtenden Anlage an ein Gehäusebauteil, insbesondere an eine Ventil- und/oder Drosseleinheit, vorzugsweise an ein Rückschlagventil (18), aufweist, die insbesondere eine umlaufende, radial nach außen gerichtete Dichtung (34) ist.

6. Filterelement (10) nach einem der vorhergehenden Ansprüche, wobei der Abströmanschluss (131) eine Dichtung (48) zur dichtenden Anlage an den gehäuseseitigen Abströmkanal (40) aufweist, die insbesondere eine umlaufende, radial nach außen gerichtete Dichtung (131) ist.

7. Filterelement (10) nach einem der vorhergehenden Ansprüche, wobei das Filterelement (10) im Bereich derjenigen Stirnseite, welche bei montiertem Filterelement (10) unten angeordnet ist, zwei umlaufende Dichtungen (133, 134) aufweist, wobei insbesondere eine der Dichtungen (133) oder beide radial nach außen gerichtet und/oder eine der Dichtungen (134) oder beide radial nach innen gerichtet ist.

8. Filterelement nach einem der vorhergehenden Ansprüche, wobei die Endscheibe (20) eine Bohrung (38) dergestalt aufweist, dass die Fluidleitung (16) über die Bohrung (38) mit einem Außenbereich (44) des Filterelements (10) verbunden ist.

9. Filterelement nach einem der vorhergehenden Ansprüche, wobei die Fluidleitung (16) des zweiten Fluids (66) in einem mit der Endscheibe (20) verbundenen und über wenigstens eine einer ersten Endscheibe (20) und/oder einer zweiten Endscheibe (21) hinausragenden Rohr (24), insbesondere Stützrohr (24), angeordnet ist.

10. Filterelement nach einem der vorhergehenden Ansprüche, wobei im zweiten Fluidpfad (14) ein Rückschlagventil (18) angeordnet ist, welches Rückschlagventil (18) sperrt, insbesondere wenn eine vorgegebene Systemdruckuntergrenze unterschritten und/oder ein Fluss des ersten Fluids (64) durch das Filterelement (10) unterbrochen wird oder ist.

11. Filterelement nach einem der vorhergehenden Ansprüche, wobei die Fluidleitung (16) mit einer Ablaufvorrichtung (50) zur Trennung von erstem (64) und zweitem Fluid (66) beim Ausbau des Filterelements aus einem Filtergehäuse (101) versehen ist.

12. Filterelement nach einem der vorhergehenden Ansprüche, wobei das Filterelement mit mindestens zwei Dichtungen (46, 133, 134) zur Trennung von Rohseite (60) und Reinseite (62) des ersten Fluidpfads (12) beim Ausbau des Filterelements aus einem Filtergehäuse (101) abdichtbar ist, wobei das Filterelement beim bestimmungsgemäßen Einbau in ein Filtersystem (100) über eine an der ersten Endscheibe (20) angeordnete Schnellkupplung (70) mit einem zu koppelnden Filtergehäuse (101) verbunden ist.

13. Filterelement nach einem der vorhergehenden Ansprüche, wobei das Filterelement mit einer Wasserabscheidevorrichtung (69) versehen ist, umfassend einen Koaleszer (74), welcher konzentrisch um die Fluidleitung (16) auf einer Reinseite (62) des Filterelements (10) angeordnet ist, sowie einen Endabscheider (68), welcher konzentrisch um die Fluidleitung (16) zwischen Koaleszer (74) und Fluidleitung (16) angeordnet ist.

14. Filtersystem (100) mit einem Filterelement (10) nach einem der vorhergehenden Ansprüche, wobei das Filterelement (10) wechselbar in einem Filtergehäuse (101) des Filtersystems (100) angeordnet ist und welches Filtersystem (100) eine Aufnahme (106) für eine Fluidleitung (16) und/oder eine Aufnahme (42) für ein Rückschlagventil (18) vorsieht, wobei der zweite Fluidpfad (14) des Filterelements (10) zur Entlüftung eines Kraftstoffführungssystems einer Brennkraftmaschine vorgesehen ist.

15. Filtersystem nach Anspruch 14, wobei das Rückschlagventil (18) mit einer Schnappverbindung (22) befestigbar ist, insbesondere fluiddicht befestigbar ist, oder in einem Gehäuseoberteil (102) eines Filtergehäuses (101) anbringbar ist.

## Claims

1. Filter element (10) with a first fluid path (12) on a raw side (60) for filtering a first fluid (64) and a second fluid path (14) with a fluid line (16) on a clean side (62) for guiding a second fluid (66), wherein the filter element (10) is provided at least on one side with a first end disk (20),
wherein the fluid line (16) is centrically disposed in the interior space (36) of the filter element (10) and connected to the end disk (20) for a common dismounting, in particular fixed to the filter element, wherein the filter element (10) features a discharge connection (131) which is designed as nozzle-shaped extension of the fluid line (16) and disposed coaxially in relation to a longitudinal element axis (129), wherein by means of the discharge connection (131) the fluid line (16) can be connected during the mounting of the filter element (10) in the housing (101) of the filter system (100) to a housing-sided discharge channel (40), **characterized in that**
in the area of the front side of the filter element (10) on which the discharge connection (131) is disposed,
a clean fluid outlet (128) is provided, which is provided with a nozzle-shaped extension (137), which surrounds the discharge connection (131) and
a water outlet (140) for water separated from the first fluid is provided, which surrounds the nozzle-shaped extension (137) of the clean fluid outlet (128).

2. Filter element (10) according to claim 1, wherein the filter element (10) features the fluid line (16), which leads from one front side of the filter element (10) to the opposite front side of the filter element (10), preferably through an interior space (36) surrounded by a filter body (11) of the filter element (10).

3. Filter element (10) according to claim 1 or 2, wherein the filter element (10) features an inflow connection (122) by means of which the fluid line (16) can be connected during mounting of the filter element (10) in the housing (101) of the filter system (100) in particular to a valve and/or throttle unit, preferably to a non-return valve (18).

4. Filter element (10) according to claim 3, wherein the inflow connection (122) is designed as nozzle-shaped extension of the fluid line (16), which projects in particular on a front side of the filter element (10) and/or is disposed in particular coaxially in relation to a longitudinal element axis (129).

5. Filter element (10) according to claim 3, wherein the inflow connection (122) features a seal (34), which is in particular a surrounding seal (34) radially outwardly directed, for a sealing contact to a housing component, in particular to a valve and/or throttle unit, preferably to a non-return valve (18).

6. Filter element (10) according to one of the above claims, wherein the discharge connection (131) features a seal (48), which is in particular a surrounding seal (131) radially outwardly directed, for a sealing contact to a housing-sided discharge channel (40).

7. Filter element (10) according to one of the above claims, wherein the filter element (10) features two surrounding seals (133, 134) in the area of the front side, which is disposed at the bottom when the filter element (10) is mounted, wherein in particular one of the seals (133) or both is radially outwardly directed and/or one of the seals (134) or both is radially inwardly directed.

8. Filter element according to one of the above claims, wherein the end disk (20) features a borehole (38) in such a way that the fluid line (16) is connected via the borehole (38) with an outer area (44) of the filter element (10).

9. Filter element according to one of the above claims, wherein the fluid line (16) of the second fluid (66) is disposed in a tube (24), in particular support tube (24), connected to the end disk (20) and protruding from at least one of a first end disk (20) and/or of a second end disk (21).

10. Filter element according to one of the above claims, wherein in the second fluid path (14) a non-return valve (18) is disposed, said non-return valve (18) is blocking, in particular if a predetermined system pressure falls below the limit and/or a flow of the first fluid (64) is interrupted by the filter element (10).

11. Filter element according to one of the above claims, wherein the fluid line (16) is provided with a discharge device (50) for separating first (64) and second fluid (66) when dismounting the filter element from a filter housing (101).

12. Filter element according to one of the above claims, wherein the filter element can be sealed by means of at least two seals (46, 133, 134) for separating raw side (60) and clean side (62) of the first fluid path (12) when dismounting the filter element from a filter housing (101), wherein the filter element is connected to a filter housing (101) to be coupled via a quick coupling (70) disposed at the first end disk (20) during the intended installation into a filter system (100).

13. Filter element according to one of the above claims, wherein the filter element is provided with a water-separating device (69), comprising a coalescer (74) which is disposed concentrically around the fluid line (16) on a clean side (62) of the filter element (10), as well as a final separator (68) which is disposed concentrically around the fluid line (16) between coalescer (74) and fluid line (16).

14. Filter system (100) with a filter element (10) according to one of the above claims, wherein the filter element (10) is disposed exchangeably in a filter housing (101) of the filter system (100) and said filter system (100) providing a receptacle (106) for a fluid line (16) and/or a receptacle (42) for a non-return valve (18), wherein the second fluid path (14) of the filter element (10) is provided for venting a fuel guiding system of an internal combustion engine.

15. Filter system according to claim 14, wherein the non-return valve (18) is attachable by means of a snap-in connection (22), in particular attachable in a fluid-tight manner, or mountable in a housing upper part (102) of a filter housing (101).

## Revendications

1. Élément filtrant (10) avec un premier chemin de fluide (12) d'un côté brut (60) destiné à filtrer un premier fluide (64) et avec un deuxième chemin de fluide (14) avec un conduit de fluide (16) d'un côté pur (62) destiné à acheminer un deuxième fluide (66), l'élément filtrant (10) étant pourvu, au moins d'un côté, d'un premier disque d'extrémité (20),
le conduit de fluide (16) étant centré dans l'espace intérieur (36) de l'élément filtrant (10) et relié au disque d'extrémité (20) en vue d'un démontage commun, l'élément filtrant étant notamment fixe, l'élément filtrant (10) présentant un raccord de sortie (131) qui est exécuté en tant que prolongement en forme de tubulure du conduit de fluide (16) et disposé de façon coaxiale à un axe longitudinal de l'élément (129), le raccord de sortie (131) permettant de raccorder le conduit de fluide (16), lors du montage de l'élément filtrant (10) dans le boîtier (101) du système de filtre (100), à un canal de sortie (40) côté boîtier, **caractérisé en ce que**
à proximité de la face frontale de l'élément filtrant (10) sur laquelle se situe le raccord de sortie (131),
est positionnée une sortie de fluide pur (128) qui est pourvue d'un prolongement (137) en forme de tubulure et encerclant le raccord de sortie (131), et
qu'un écoulement d'eau (140) est prévu pour l'eau séparée du premier fluide, cet écoulement encerclant le prolongement (137) en forme de tubulure de la sortie de fluide pur (128).

2. Élément filtrant (10) selon la revendication 1, l'élément filtrant (10) étant pourvu du conduit de fluide (16) qui mène d'une face frontale de l'élément filtrant (10) à la face frontale opposée de l'élément filtrant (10), de préférence à travers un espace intérieur (36) entouré d'un corps de filtre (11) de l'élément filtrant (10).

3. Élément filtrant (10) selon la revendication 1 ou 2, l'élément filtrant (10) comportant un raccord d'entrée (122) au moyen duquel le conduit de fluide (16) peut être raccordé, lors du montage de l'élément filtrant (10) dans le boîtier (101) du système de filtre (100), en particulier à une unité de vannes et/ou à une unité d'étranglement, de préférence à un clapet antiretour (18).

4. Élément filtrant (10) selon la revendication 3, le raccord d'entrée (122) étant exécuté en tant que prolongement en forme de tubulure du conduit de fluide (16) qui est en saillie notamment sur une face frontale de l'élément filtrant (10) et/ou est notamment disposé de façon coaxiale à un axe longitudinal de l'élément (129).

5. Élément filtrant (10) selon la revendication 3, le raccord d'entrée (122) comportant un joint (34) pour établir un contact étanche avec un composant du boîtier, notamment avec une unité de vanne et/ou une unité d'étranglement, de préférence avec un clapet antiretour (18), ce joint étant en particulier un joint (34) périphérique et orienté de façon radiale vers l'extérieur.

6. Élément filtrant (10) selon l'une des revendications précédentes, le raccord de sortie (131) comportant un joint (48) pour établir un contact étanche avec le canal de sortie (40) côté boîtier, ce joint étant en particulier un joint (131) périphérique et orienté de façon radiale vers l'extérieur.

7. Élément filtrant (10) selon l'une des revendications précédentes, l'élément filtrant (10) comportant deux joints périphérique (133, 134) dans la zone de la face frontale qui est placée en bas en position montée de l'élément filtrant (10), en particulier l'un des joints (133) ou les deux joints étant orientés en sens radial vers l'extérieur et/ou l'un des joints (134) ou les deux joints étant orientés en sens radial vers l'intérieur.

8. Élément filtrant selon l'une des revendications précédentes, le disque d'extrémité (20) étant doté d'un alésage (38) de sorte que le conduit de fluide (16) soit relié, par l'intermédiaire de cet alésage (38), à une zone extérieure (44) de l'élément filtrant (10).

9. Élément filtrant selon l'une des revendications précédentes, le conduit de fluide (16) du deuxième fluide (66) étant positionné dans un tube (24), en particulier un tube de support (24), qui est relié au disque d'extrémité (20) ou qui dépasse au moins d'un premier disque d'extrémité (20) et/ou d'un deuxième disque d'extrémité (21).

10. Élément filtrant selon l'une des revendications précédentes, un clapet antiretour (18) étant disposé dans le deuxième chemin de fluide (14), ce clapet antiretour (18) bloquant le fluide, en particulier lorsqu'une limite inférieur de pression de système n'est plus atteinte et/ou qu'un flux du premier fluide (64) est interrompu par l'élément filtrant (10).

11. Élément filtrant selon l'une des revendications précédentes, le conduit de fluide (16) comportant un dispositif d'écoulement (50) servant à séparer le premier fluide (64) et le deuxième fluide (66) lorsque l'élément filtrant est démonté d'un boîtier de filtre (101).

12. Élément filtrant selon l'une des revendications précédentes, l'élément filtrant pouvant être étanché au moyen d'au moins deux joints (46, 133, 134) afin de séparer le côté brut (60) du côté pur (62) du premier chemin de fluide (12) lorsque l'élément filtrant est démonté d'un boîtier de filtre (101), l'élément filtrant étant relié, lors du montage conforme dans un système de filtre (100), par l'intermédiaire d'un raccord rapide (70) situé sur le premier disque d'extrémité (20), à un boîtier de filtre (101) à raccorder.

13. Élément filtrant selon l'une des revendications précédentes, l'élément filtrant étant équipé d'un dispositif séparateur d'eau (69), comprenant un coalesceur (74) qui est positionné de manière concentrique autour du conduit de fluide (16) d'un côté pur (62) de l'élément filtrant (10) et comprenant un séparateur final (68), qui est positionné de manière concentrique autour du conduit de fluide (16) entre le coalesceur (74) et le conduit de fluide (16).

14. Système de filtre (100) avec un élément filtrant (10) selon l'une des revendications précédentes, l'élément filtrant (10) étant disposé de façon échangeable dans un boîtier de filtre (101) du système de filtre (100) et ce système de filtre (100) comportant un logement (106) destiné à un conduit de fluide (16) et/ou un logement (42) destiné à un clapet antiretour (18), le deuxième chemin de fluide (14) de l'élément filtrant (10) étant prévu pour la purge d'un système d'alimentation en carburant d'un moteur à combustion interne.

15. Système de filtre selon la revendication 14, le clapet antiretour (18) pouvant être fixé au moyen d'un assemblage à encliquetage (22), notamment de manière étanche au fluide, ou pouvant être montée dans une partie supérieure de boîtier (102) d'un boîtier de filtre (101).
